# EUROPEAN PATENT APPLICATION

(11) **EP 4 707 992 A1**
(43) Date of publication of application: **11.03.2026**
(21) Application number: 25717853.3
(22) Date of filing: 09.04.2025
(51) Int. Cl.: G06F 1/16

(54) **FOLDABLE ELECTRONIC DEVICE INCLUDING SUPPORT PLATES**

(30) Priority: 19.07.2024 KR 20240095987; 30.08.2024 KR 20240118154
(71) Applicant: Samsung Electronics Co., Ltd., Suwon-si, Gyeonggi-do 16677 (KR)
(72) Inventor: JUNG, Soli, Suwon-si Gyeonggi-do 16677 (KR); KANG, Jeongho, Suwon-si Gyeonggi-do 16677 (KR); KIM, Namwoo, Suwon-si Gyeonggi-do 16677 (KR); KIM, Minho, Suwon-si Gyeonggi-do 16677 (KR); KIM, Jihoon, Suwon-si Gyeonggi-do 16677 (KR); PARK, Changi, Suwon-si Gyeonggi-do 16677 (KR); SONG, Minsuk, Suwon-si Gyeonggi-do 16677 (KR); CHOI, Junyoung, Suwon-si Gyeonggi-do 16677 (KR); JUN, Jaeyoung, Suwon-si Gyeonggi-do 16677 (KR); AHN, Jaeuk, Suwon-si Gyeonggi-do 16677 (KR)
(74) Representative: Nederlandsch Octrooibureau
(86) International application number: PCT/KR2025/004845
(87) International publication number: WO 2026/019014

(57) **Abstract**

A multi foldable electronic device includes a housing including a first housing part, second housing part, and a third housing part disposed between the first housing part and the second housing part, in a multi folded state, and a flexible display including a first hinge structure rotatably connecting the first housing part and the second housing part, a second hinge structure rotatably connecting the second housing part and the third housing part, a first folding area formed by rotation of the first hinge structure, and a second folding area formed by rotation of the second hinge structure. The flexible display includes a display panel, a flexible plate disposed on a back surface of the display panel and configured to support the display panel, and a set of supporting plates supporting the flexible plate.

## Description

### [Technical Field]

The present disclosure relates to a foldable electronic device including supporting plates.

### [Background Art]

A foldable electronic device may have a folded state or an open state. The foldable electronic device may include a supporting plate for supporting a deformation portion (or a foldable portion) of a display.

The above-described information may be provided as a related art for the purpose of helping understanding of the present disclosure. No claim or determination is raised as to whether any of the above-described descriptions may be applied as a prior art related to the present disclosure.

### [Disclosure]

### [Technical Solution]

A multi foldable electronic device is disclosed. The multi foldable electronic device may comprise a housing and a flexible display. The housing may include a first housing part, a second housing part, and a third housing part, and a first hinge structure rotatably connecting the first housing part and the second housing part, and a second hinge structure rotatably connecting the second housing part and the third housing part and wider than the first hinge structure. The flexible display may be disposed on the first housing part, the second housing part, and the third housing part, and include a first folding area formed by rotation of the first hinge structure and a second folding area formed by rotation of the second hinge structure. The flexible display may include a display panel, a flexible plate disposed on a back surface of the display panel and configured to support the display panel, and a set of supporting plates. The set of supporting plates includes a first rigid plate corresponding to a partial area of a left side of the second folding area, a second rigid plate corresponding to a partial area of a right side of the second folding area, and a third rigid plate corresponding to a center area of the second folding area.

A multi foldable electronic device is disclosed. The multi foldable electronic device may include a housing including a first housing part, a second housing part, and a third housing part, a first hinge structure rotatably connecting the first housing part and the second housing part, and a second hinge structure rotatably connecting the second housing part and the third housing part. The multi foldable electronic device may include a flexible display disposed on the housing and including a first folding area formed by rotation of the first hinge structure and a second folding area formed by rotation of the second hinge structure. The flexible display may include a display panel, a flexible plate supporting the display panel, and a set of supporting plates supporting the flexible plate. The flexible plate may include a first pattern portion including openings, a second pattern portion spaced apart from a side of the first pattern portion and including openings, a first supporting portion disposed between the first pattern portion and the second pattern portion, a second supporting portion connected to another side of the first pattern portion, and a third supporting portion connected to a side of the second pattern portion. The set of the supporting plates may include a first rigid plate disposed on the first supporting portion of the flexible plate.

### [Description of the Drawings]

FIG. 1A illustrates an example of a first state of an electronic device.
FIG. 1B illustrates an example of a second state of an electronic device.
FIG. 1C illustrates an example of a third state of an electronic device.
FIG. 2A is a plan view of an electronic device from which a flexible display is removed.
FIG. 2B is a rear view of an electronic device from which a rear cover and a display are removed.
FIG. 3 is an exploded perspective view of an electronic device.
FIG. 4 illustrates a disposition between a position of a magnet and a hinge structure, disposed in an electronic device.
FIG. 5 illustrates a connection relationship between a second hinge structure and a second housing part and a third housing part, disposed in the electronic device.
FIG. 6 indicates a section that interferes with a portion of a set of supporting plates disposed on the second hinge structure.
FIG. 7A is a partially exploded perspective view illustrating a relationship between a second hinge structure and a set of supporting plates in a folded state.
FIG. 7B illustrates a structure of a portion of a set of supporting plates disposed on a second hinge structure in a folded state of a multi foldable electronic device.
FIG. 8A is a partially exploded perspective view illustrating a relationship between a second hinge structure and a set of supporting plates in a folded state.
FIG. 8B illustrates a structure of a portion of a set of supporting plates disposed on a second hinge structure in a folded state of a multi foldable electronic device.
FIG. 9 illustrates a structure of a portion of a set of supporting plates disposed on a second hinge structure in an unfolded state of a multi foldable electronic device.
FIGS. 10 and 11 illustrate a disposition of a portion of a set of supporting plates a waterproof member disposed on a back surface of a display according to an embodiment.
FIG. 12 illustrates an example of display deformation in case that a set of supporting plates is omitted.
FIG. 13 illustrates a set of supporting plates including a protruding portion.
FIG. 14 is a cross-sectional view illustrating that a protruding portion operates as a stopper.
FIG. 15 illustrates an example of a portion of a set of supporting plates disposed on a second hinge structure.
FIGS. 16, 17, 18, and 19 illustrate examples of a portion of a set of supporting plates disposed on a second hinge structure.
FIGS. 20, 21, and 22 illustrate an exemplary structure between a portion of a set of supporting plates disposed on the second hinge structure and a hinge structure.
FIG. 23 illustrates an exemplary structure of an elastic portion of a set of supporting plates disposed on a second hinge structure.
FIG. 24 is a block diagram of an electronic device in a network environment according to various embodiments.

### [Mode for Invention]

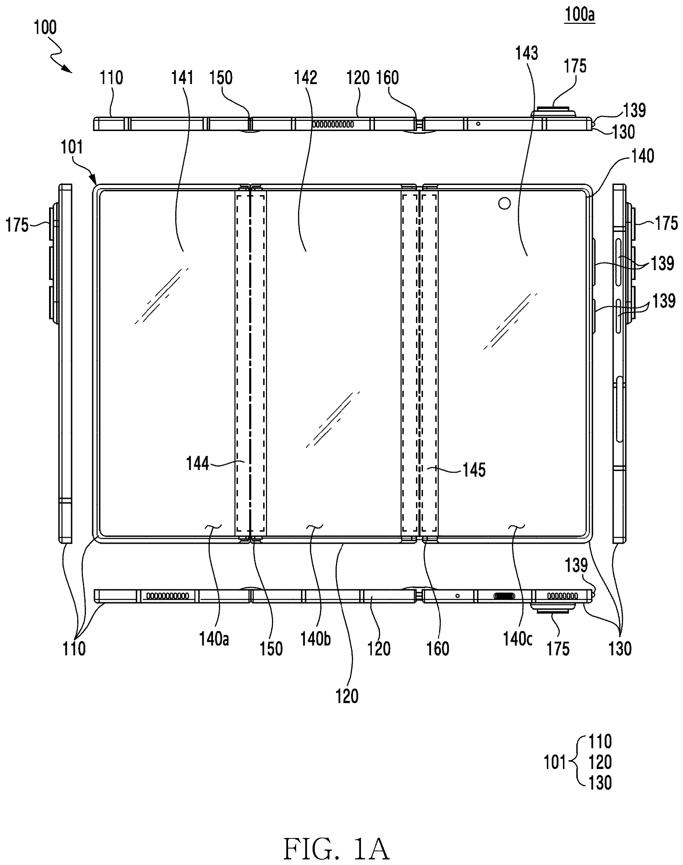

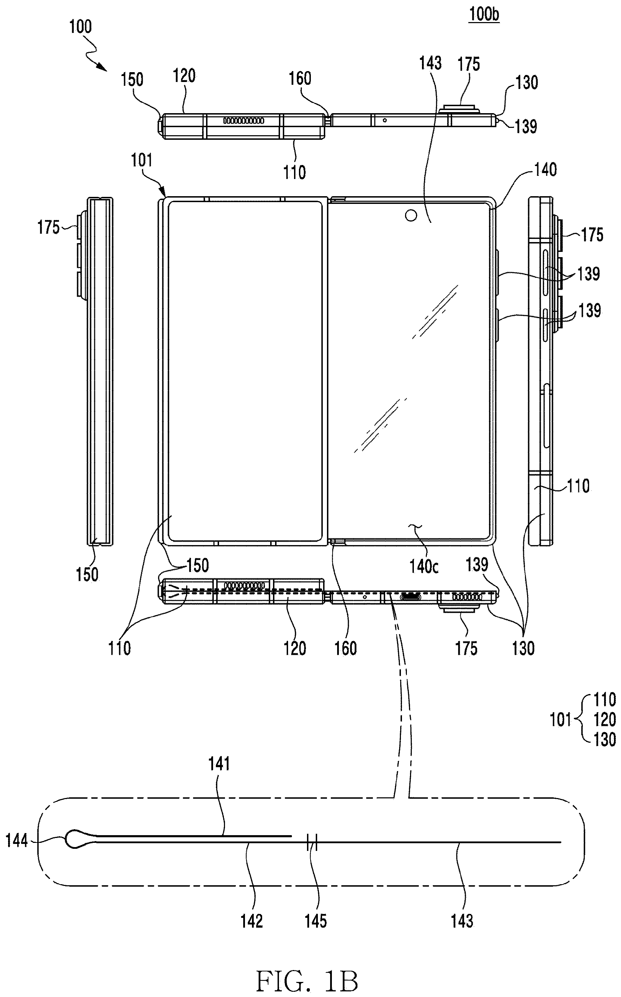

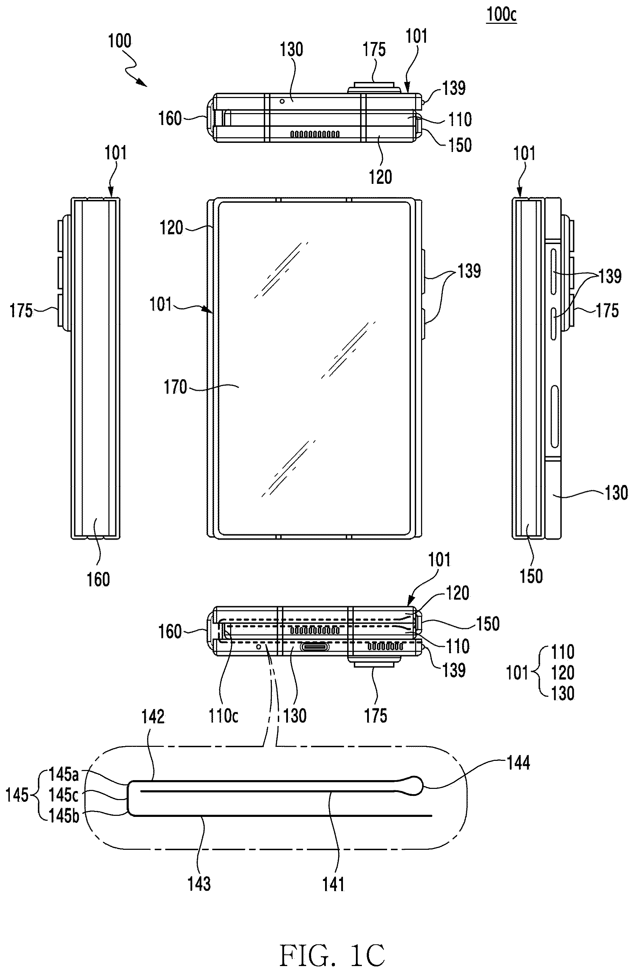

FIG. 1A illustrates an example of a first state of an electronic device. FIG. 1B illustrates an example of a second state of an electronic device. FIG. 1C illustrates an example of a third state of an electronic device.

Referring to FIGS. 1A, 1B, and 1C, an electronic device 100 may include a housing structure 101, a flexible display 140, a first hinge structure 150, a second hinge structure 160, and a display 170. The housing structure 101 may include a first housing part 110, a second housing part 120, and a third housing part 130.

The first housing part 110 may be rotatably coupled with the second housing part 120 by the first hinge structure 150. The second housing part 120 and the first housing part 110 may be rotated with respect to the first hinge structure 150. While the first housing part 110 is rotated with respect to the first hinge structure 150, the second housing part 120 may be rotated with respect to the first hinge structure 150. For example, when the second housing part 120 and the first housing part 110 are rotated with respect to the first hinge structure 150, each displacement of the second housing part 120 may be substantially the same as each displacement of the first housing part 110.

The third housing part 130 may be rotatably coupled with the second housing part 120 by the second hinge structure 160. The second housing part 120 and the third housing part 130 may be rotated with respect to the second hinge structure 160. While the second housing part 120 is rotated with respect to the second hinge structure 160, the third housing part 130 may be rotated with respect to the second hinge structure 160. For example, when the second housing part 120 and the third housing part 130 are rotated with respect to the second hinge structure 160, each displacement (or each change) of the second housing part 120 may be substantially the same as each displacement of the third housing part 130.

The first hinge structure 150 and the second hinge structure 160 may change a state of the electronic device. The first hinge structure 150 and the second hinge structure 160 may provide (or may enable) a first state 100a of the electronic device 100 (or a first state 100a of the housing structure 101). The first state 100a of the electronic device 100 (or the first state 100a of the housing structure 101) may be described as an unfolded state (or an unfolding state) of the electronic device 100 (or the housing structure 101). In the first state 100a, a front surface of the first housing part 110, a front surface of the second housing part 120, and a front surface of the third housing part 130 may define a front surface of the electronic device 100. In the first state 100a, the front surface of the first housing part 110, the front surface of the second housing part 120, and the front surface of the third housing part 130 may face the same direction. In the first state 100a, the electronic device 100 may provide a large display area of the flexible display 140 to a user.

The first hinge structure 150 and the second hinge structure 160 may provide a second state 100b of the electronic device 100. The second state 100b of the electronic device 100 may be described as a state in which the electronic device 100 is partially folded and partially unfolded (or a single folding state or a half-folding state). For example, in the second state 100b, the front surface of the second housing part 120 and the front surface of the third housing part 130 may face the same direction, and the front surface of the first housing part 110 and the front surface of the second housing part 120 may face opposite directions. For example, in the second state 100b, the first housing part 110 and the second housing part 120 may be folded, and the second housing part 120 and the third housing part 130 may be unfolded. In the second state 100b, the electronic device 100 may provide visual information through a portion (e.g., a third display area 140c) of the flexible display 140.

The electronic device 100 may change from the first state 100a to a third state 100c through the second state 100b. The electronic device 100 may change from the first state 100a that is the unfolded state, to the second state 100b that is the partially unfolded state. For example, the electronic device 100 may change from the first state 100a in which the first housing part 110, the second housing part 120, and the third housing part 130 face the same direction, to the second state 100b in which the front surface of the first housing part 110 faces the front surface of the second housing part 120. The electronic device 100 may change from the second state 100b that is the partially unfolded state, to the third state 100c that is a folded state. For example, when the second state 100b changes to the third state 100c, the first housing part 110 and the second housing part 120 that are folded may be disposed on the third housing part 130.

The first hinge structure 150 and the second hinge structure 160 may provide the third state 100c of the electronic device 100 (or the third state 100c of the housing structure 101). The third state 100c of the electronic device 100 (or the third state 100c of the housing structure 101) may be described as a folded state (or a folding state or a multi folding state) of the electronic device 100 (or the housing structure 101). In the third state 100c, the front surface of the first housing part 110 and the front surface of the second housing part 120 may face opposite directions, and the front surface of the second housing part 120 and the front surface of the third housing part 130 may face opposite directions. In the third state 100c, the front surface of the first housing part 110 and the front surface of the third housing part 130 may face the same direction. For example, in the third state 100c, the front of the second housing part 120 may face the front of the first housing part 110, and the front of the third housing part 130 may face a rear surface of the first housing part 110. In the third state 100c, a rear surface of the second housing part 120 may be exposed to the outside. The display 170 may be disposed on the rear surface of the second housing part 120. In the third state 100c, a rear surface of the third housing part 130 may be exposed to the outside. A camera 175 may be disposed on the rear surface of the third housing part 130. In the third state 100c, the electronic device 100 may be folded to improve portability and may provide visual information through the display 170 disposed on the rear surface of the second housing part 120.

The electronic device 100 may further include a key button 139. The key button 139 may be exposed from a structure (e.g., an opening) formed on a side surface of the third housing part 130 and may partially protrude to the outside of the electronic device 100. The key button 139 may provide a physical input to processing circuitry inside the electronic device 100 by a pressure transmitted from the outside. The key button 139 may not be included in the electronic device 100 and may be implemented in another form, such as a soft key displayed on the flexible display 140 or the display 170.

The key button 139 may be disposed on the side surface of the third housing part 130 so as to be exposed to the outside in the third state 100c. As the key button 139 is disposed on the side surface of the third housing part 130, the key button 139 may be disposed in a direction in which the side surface of the third housing part 130 faces. Despite a state of the electronic device 100 being changed from the third state 100c to the first state 100a by the user looking at the display 170, a position of the key button 139 disposed on the side surface of the third housing part 130 may not be moved. For example, referring to FIG. 1A, when the flexible display 140 is viewed from above in the first state 100a, the key button 139 may be disposed on a right side. Referring to FIG. 1B, in the third state 100c, when the display 170 is viewed from above, the key button 139 may be disposed on the right side.

The flexible display 140 may at least partially define an exterior of the electronic device 100. The flexible display 140 may be partially disposed in the housing structure 101. The flexible display 140 may define a front surface of the electronic device 100. The flexible display 140 may include a first unfoldable portion 141, a second unfoldable portion 142, a third unfoldable portion 143, a first foldable portion 144, and a second foldable portion 145. The first unfoldable portion 141 of the flexible display 140 may be disposed on the front surface of the first housing part 110. The second unfoldable portion 142 of the flexible display 140 may be disposed on the front surface of the second housing part 120. The third unfoldable portion 143 of the flexible display 140 may be disposed on the front surface of the third housing part 130. The first foldable portion 144 of the flexible display 140 may be disposed between the first unfoldable portion 141 and the third unfoldable portion 143 of the flexible display 140. For example, the first foldable portion 144 of the flexible display 140 may be disposed on the first hinge structure 150 connecting the first housing part 110 and the second housing part 120. The second foldable portion 145 of the flexible display 140 may be disposed between the second unfoldable portion 142 and the third unfoldable portion 143 of the flexible display 140. For example, the second foldable portion 145 of the flexible display 140 may be disposed on the second hinge structure 160 connecting the second housing part 120 and the third housing part 130.

The first hinge structure 150 and the second hinge structure 160 may face substantially the same direction as the first unfoldable portion 141, the second unfoldable portion 142, and the third unfoldable portion 143 of the flexible display 140. In the first state 100a, the first foldable portion 144 and the second foldable portion 145 may be disposed on substantially the same horizontal plane as the first unfoldable portion 141, the second unfoldable portion 142, and the third unfoldable portion 143.

The first hinge structure 150 and the second hinge structure 160 may provide the second state 100b of the electronic device 100. In the second state 100b, the first unfoldable portion 141 of the flexible display 140 may face the second unfoldable portion 142 of the flexible display 140, and the third unfoldable portion 143 of the flexible display 140 may face the same direction as the second unfoldable portion 142 of the flexible display 140. For example, the second unfoldable portion 142 and the third unfoldable portion 143 may be disposed on substantially the same horizontal plane.

In the second state 100b, as the first foldable portion 144 of the flexible display 140 is bent by the first hinge structure 150, the first foldable portion 144 of the flexible display 140 may be folded so that the first unfoldable portion 141 of the flexible display 140 and the second unfoldable portion 142 of the flexible display 140 face different directions.

In the second state 100b, as the second foldable portion 145 of the flexible display 140 is maintained in the unfolded state by the second hinge structure 160, the second foldable portion 145 of the flexible display 140 may be unfolded so that the second unfoldable portion 142 of the flexible display 140 and the third unfoldable portion 143 of the flexible display 140 face the same direction.

The first hinge structure 150 and the second hinge structure 160 may provide the third state 100c of the electronic device 100. In the third state 100c, the second unfoldable portion 142 of the flexible display 140 may face the first unfoldable portion 141 of the flexible display 140, and the third unfoldable portion 143 of the flexible display 140 may face the rear surface of the first housing part 110.

In the third state 100c, as the first foldable portion 144 of the flexible display 140 is bent by the first hinge structure 150, the first foldable portion 144 of the flexible display 140 may be folded so that the first unfoldable portion 141 of the flexible display 140 and the second unfoldable portion 142 of the flexible display 140 face different directions.

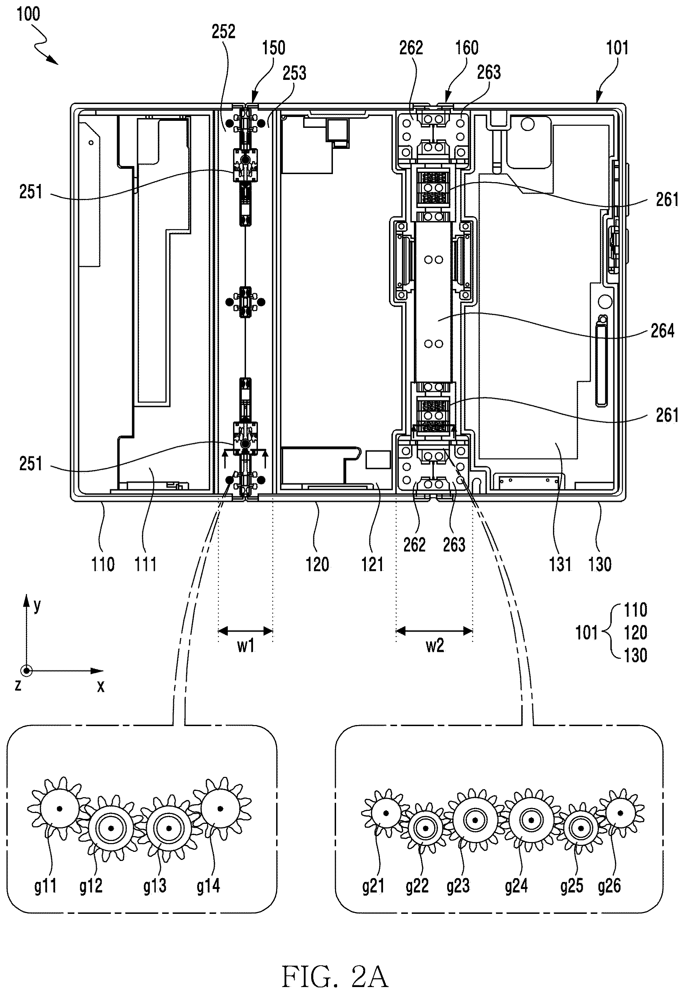

In the third state 100c, as the second foldable portion 145 of the flexible display 140 is bent by the second hinge structure 160, the second foldable portion 145 of the flexible display 140 may be folded so that the second unfoldable portion 142 of the flexible display 140 and the third unfoldable portion 143 of the flexible display 140 face different directions. The second foldable portion 145 may further include a first deformation portion 145a, a second deformation portion 145b, and a planar portion 145c. The first deformation portion 145a may be disposed between the planar portion 145c and the second unfoldable portion 142, and the second deformation portion 145b may be disposed between the planar portion 145c and the third unfoldable portion 143. The planar portion 145c may be disposed between the first deformation portion 145a and the second deformation portion 145b. The planar portion 145c may be supported by a supporting plate (e.g., a supporting plate 264 of FIG. 2A) that is distinguished from hinge plates (e.g., a third hinge plate 262 and a fourth hinge plate 263 of FIG. 2A) of the second hinge structure 160. Regardless of the state of the electronic device 100, the planar portion 145c may maintain a planar surface. The first deformation portion 145a and the second deformation portion 145b may be unfolded in the first state 100a and the second state 100b, and in the third state 100c, the first deformation portion 145a and the second deformation portion 145b may be bent so that the second unfoldable portion 142 and the third unfoldable portion 143 face different directions. In the third state 100c, the first housing part 110 may be disposed between the second housing part 120 and the third housing part 130. In the third state 100c, the second foldable portion 145 of the flexible display 140 disposed on the second hinge structure 160 may partially face a side surface 110c of the first housing part 110.

The display area of the flexible display 140 may include a first display area 140a, a second display area 140b, and a third display area 140c. The display area indicates an area capable of providing visual information from the flexible display 140. In the first state 100a, the entire display area of the flexible display 140 may be viewed from a front surface of the housing structure 101. For example, in the first state 100a, the first display area 140a, the second display area 140b, and the third display area 140c of the flexible display 140 may be visually exposed. The electronic device 100 may provide the user with a large display area including the first display area 140a, the second display area 140b, and the third display area 140c.

In the second state 100b, the display area of the flexible display 140 may be partially visible from the front surface of the third housing part 130. For example, the third display area 140c may be visually exposed, and the first display area 140a and the second display area 140b may not be visually exposed.

The display area of the flexible display 140 may not be visible in the third state 100c. For example, in the third state 100c, the first display area 140a, the second display area 140b, and the third display area 140c of the flexible display 140 may not be visually exposed.

As a non-limiting example, when the flexible display 140 is used to display a screen in the first state 100a of the electronic device 100, the first display area 140a, the second display area 140b, and the third display area 140c of the flexible display 140 may be activated. As a non-limiting example, in the third state 100c, the first display area 140a, the second display area 140b, and the third display area 140c of the flexible display 140 may be deactivated. As a non-limiting example, in the second state 100b of the electronic device 100, when the flexible display 140 is used to display a screen, the third display area 140c may be activated, and the first display area 140a and the second display area 140b of the flexible display 140 may be deactivated.

As a non-limiting example, when the flexible display 140 is used to display a screen in the first state 100a of the electronic device 100, the first display area 140a, the second display area 140b, and the third display area 140c of the flexible display 140 may display visual information. As a non-limiting example, in the third state 100c, the first display area 140a, the second display area 140b, and the third display area 140c of the flexible display 140 may provide a black image. As a non-limiting example, in the second state 100b of the electronic device 100, when the flexible display 140 is used to display a screen, the third display area 140c may provide visual information, and the first display area 140a and the second display area 140b of the flexible display 140 may provide a black image.

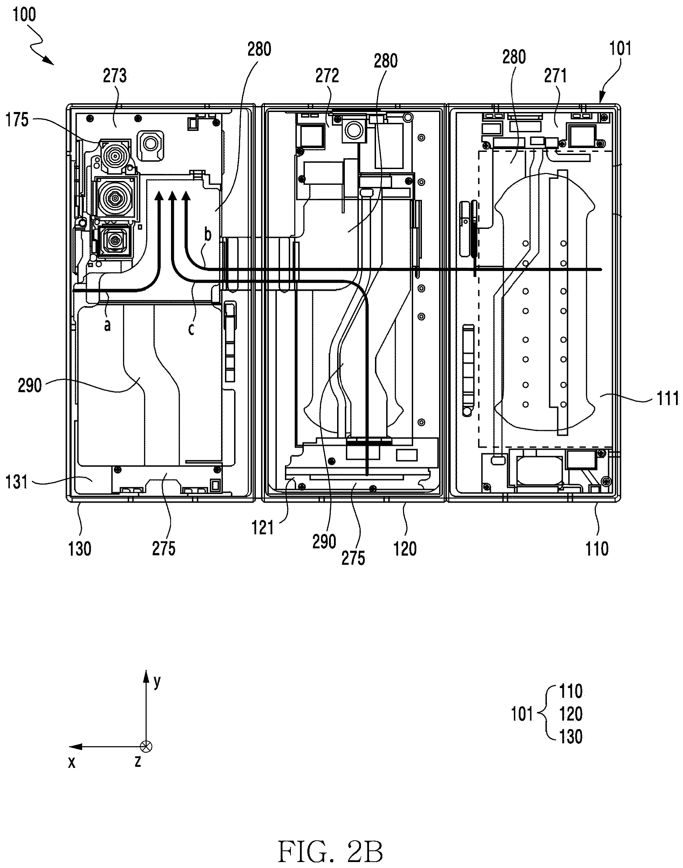

FIG. 2A is a plan view of an electronic device from which a flexible display is removed. FIG. 2B is a rear view of an electronic device from which a rear cover and a display are removed.

Referring to FIGS. 2A and 2B, an electronic device 100 may include a first hinge structure 150 and a second hinge structure 160. A first width w1 of the first hinge structure 150 may be narrower than a second width w2 of the second hinge structure 160. A difference between the first width w1 of the first hinge structure 150 and the second width w2 of the second hinge structure 160 may be equal to or greater than a thickness of a first housing part 110. For example, the second hinge structure 160 may have the second width w2 wider than the first width w1, so that the first housing part 110 is disposed between a second housing part 120 and a third housing part 130 according to a third state 100c. In terms of having the narrower width than the second hinge structure 160, the first hinge structure 150 may be referred to as a narrow hinge structure. In terms of having a wider width than the first hinge structure 150, the second hinge structure 160 may be referred to as a wide hinge structure.

The first hinge structure 150 may include a first set of gears 251, a first hinge plate 252, and a second hinge plate 253. The first hinge plate 252 may be coupled to a first supporting portion 111 of the first housing part 110. The second hinge plate 253 may be coupled to a second supporting portion 121 of the second housing part 120. Gears g11, g12, g13, and g14 included in the first set of gears 251 may be configured to rotate the first hinge plate 252 and the second hinge plate 253. It should be appreciated, however, that a different number of gears may also be used to configure the first set of gears 251 to rotate the first hinge plate 252 and the second hinge plate 253. For example, the gears g11, g12, g13, and g14 included in the first set of gears 251 may rotate the second hinge plate 253 (or the second housing part 120) in connection with rotation of the first hinge plate 252 (or the first housing part 110). After the first hinge plate 252 (or the first housing part 110) is rotated, the gears g11, g12, g13, and g14 included in the first set of gears 251 may be rotated according to the rotation of the first hinge plate 252 (or the first housing part 110). The second hinge plate 253 (or the second housing part 120) may be rotated in connection with the rotation of the first hinge plate 252 according to the rotation of the gears included in the first set of gears 251. The gears g11, g12, g13, and g14 included in the first set of gears 251 may include the first gear g11, the second gear g12, the third gear g13, and the fourth gear g14. The first gear g11 may be disposed adjacent to the first hinge plate 252, and the fourth gear g14 may be disposed adjacent to the second hinge plate 253. The second gear g12 and the third gear g13 may be disposed between the first gear g11 and the fourth gear g14. The first gear g11, the second gear g12, the third gear g13, and the fourth gear g14 may be sequentially engaged with each other. According to rotation of the first gear g11 in a first rotation direction (e.g., a clockwise), the second gear g12 engaged with the first gear g11 may be rotated in a second rotation direction (e.g., a counterclockwise) opposite to the first rotation direction. According to the rotation of the second gear g12 in the second rotation direction, the third gear g13 engaged with the second gear g12 may be rotated in the first rotation direction. The fourth gear g14 may be rotated in the second rotation direction according to the rotation of the third gear g13 in the first rotation direction. As the first gear g11 and the fourth gear g14 rotate in different directions, the first housing part 110 connected to the first hinge plate 252 and the second housing part 120 connected to the second hinge plate 253 may be folded or unfolded.

The second hinge structure 160 may include a second set of gears 261, a third hinge plate 262, a fourth hinge plate 263, and a supporting plate 264. The third hinge plate 262 may be coupled to the second supporting portion 121 of the second housing part 120. The fourth hinge plate 263 may be coupled to a third supporting portion 131 of the third housing part 130. Gears g21, g22, g23, g24, g25, and g26 included in the second set of gears 261 may be configured to rotate the third hinge plate 262 and the fourth hinge plate 263. It should be appreciated, however, that a different number of gears may also be used to configure the second set of gears 261 to rotate the third hinge plate 262 and the fourth hinge plate 263. For example, the gears g21, g22, g23, g24, g25, and g26 included in the second set of gears 261 may rotate the fourth hinge plate 263 (or the third housing part 130) in connection with the rotation of the third hinge plate 262 (or the second housing part 120). After the third hinge plate 262 (or the second housing part 120) is rotated, the gears g21, g22, g23, g24, g25, and g26 included in the second set of gears 261 may be rotated according to the rotation of the third hinge plate 262 (or the second housing part 120). The fourth hinge plate 263 (or the third housing part 130) may be rotated in connection with the rotation of the third hinge plate 262 according to the rotation of the gears g21, g22, g23, g24, g25, and g26 included in the second set of gears 261.

The gears g21, g22, g23, g24, g25, and g26 included in the second set of gears 261 may include the first gear g21, the second gear g22, the third gear g23, the fourth gear g24, the fifth gear g25, and the sixth gear g26. The first gear g21 may be disposed adjacent to the third hinge plate 262, and the sixth gear g26 may be disposed adjacent to the fourth hinge plate 263. The second gear g22, the third gear g23, the fourth gear g24, and the fifth gear g25 may be disposed between the first gear g21 and the sixth gear g26. The first gear g21, the second gear g22, the third gear g23, the fourth gear g24, the fifth gear g25, and the sixth gear g26 may be sequentially engaged with each other. According to rotation of the first gear g21 in the first rotation direction (e.g., the clockwise), the second gear g22 engaged with the first gear g21 may be rotated in the second rotation direction (e.g., the counterclockwise) opposite to the first rotation direction. According to the rotation of the second gear g22 in the second rotation direction, the third gear g23 engaged with the second gear g22 may be rotated in the first rotation direction. The fourth gear g24 may be rotated in the second rotation direction according to the rotation of the third gear g23 in the first rotation direction. According to the rotation of the fourth gear g24 in the second rotation direction, the fifth gear g25 engaged with the fourth gear g24 may be rotated in the first rotation direction. According to the rotation of the fifth gear g25 in the first rotation direction, the sixth gear g26 engaged with the fifth gear g25 may be rotated in the second rotation direction. As the first gear g21 and the sixth gear g26 rotate in different directions, the second housing part 120 connected to the third hinge plate 262 and the third housing part 130 connected to the fourth hinge plate 263 may be folded or unfolded.

The first hinge structure 150 and the second hinge structure 160 may further include a spiral structure. The spiral structure may include a spiral groove formed in each hinge plate or a rotating member connected to the hinge plate and a moving member sliding along the spiral groove. Hinge plates connected to the hinge structure may be configured to rotate at substantially the same angular displacement through the spiral structure.

The electronic device 100 may include a first printed circuit board 271, a second printed circuit board 272, and a third printed circuit board 273.

The first printed circuit board 271 may be disposed on the first supporting portion 111 of the first housing part 110. A hardware component in the first housing part 110 may be mounted on the first printed circuit board 271. The second printed circuit board 272 may be disposed on the second supporting portion 121 of the second housing part 120. The third printed circuit board 273 may be disposed on the third supporting portion 131 of the third housing part 130. A hardware component in the third housing part 130 may be mounted on the third printed circuit board 273.

The hardware component disposed on the first printed circuit board 271 may support a hardware component disposed on the second printed circuit board 272 and/or the hardware component disposed on the third printed circuit board 273, or independently operate.

The hardware component disposed on the second printed circuit board 272 may support the hardware component disposed on the first printed circuit board 271 or the third printed circuit board 273, or independently operate. The hardware component disposed on the second printed circuit board 272 may include a speaker, a front camera and/or display driving circuitry.

The hardware component disposed on the third printed circuit board 273 may include at least one processor (e.g., an application processor (AP), or a communication processor (CP)) including processing circuitry, memory including one or more storage media, communication circuitry, and a rear camera 175. The rear camera 175 may be exposed through a rear structure (e.g., an opening) of the second housing part 120.

The electronic device 100 may further include a sub-printed circuit board 275 and flexible printed circuit boards 280 and 290. The sub-printed circuit board 275 may be disposed on at least a portion of the first housing part 110, the second housing part 120, and the third housing part 130. The flexible printed circuit boards 280 and 290 may include a first flexible printed circuit board 280 and a second flexible printed circuit board 290. The first flexible printed circuit board 280 may electrically connect a printed circuit board disposed on each of the housing parts 110, 120, and 130. The second flexible printed circuit board 290 may connect a printed circuit board in a housing part in which the sub-printed circuit board 275 is disposed by the second flexible printed circuit board 290, and the sub-printed circuit board 275.

Components in the electronic device 100 may be connected with at least one processor in the third printed circuit board 273 through flexible printed circuit boards 280 and 290. For example, a signal received from an antenna disposed in the third housing part 130 may be transmitted to the third printed circuit board 273 where the at least one processor (e.g., the AP or the CP) is disposed, through a signal path (a) provided by the first flexible printed circuit board 280. Driving circuitry for the flexible display 140 disposed in the first housing part 110 may be connected to the third printed circuit board 273 where the at least one processor (e.g., the AP) is disposed, through a signal path (b) provided by the sub-printed circuit board 275 and the first flexible printed circuit board 280. Driving circuitry for the display 170 connected with the sub-printed circuit board 275 disposed in the second housing part 120 may be electrically connected to the third printed circuit board 273 where the at least one processor (e.g., the AP) is disposed, through a signal path (c) provided by the sub-printed circuit board 275, the first flexible printed circuit board 280, and the second flexible printed circuit board 290.

The electronic device 100 may further include batteries. Each of the batteries may be attached to the supporting portions 111, 121, and 131 included in the housing parts 110, 120, and 130. The supporting portions 111, 121, and 131 may support rechargeable batteries.

A disposition of hardware components is exemplary, and unlike as described above, the rear camera 175 and the second printed circuit board 272 may be disposed in the third housing part 130, and the third printed circuit board 273 may be disposed in the second housing part 120.

It is indicated that the first housing part 110 and the third housing part 130 rotate in an opposite direction with respect to the second housing part 120, but are not limited thereto. For example, while changing from a first state 100a to a third state 100c, the first housing part 110 may rotate counterclockwise with respect to the second housing part 120, and the third housing part 130 may rotate counterclockwise with respect to the second housing part 120. As the first housing part 110 and the third housing part 130 rotate in the same direction, a portion of a display area of the flexible display 140 may be visually exposed in a second state.

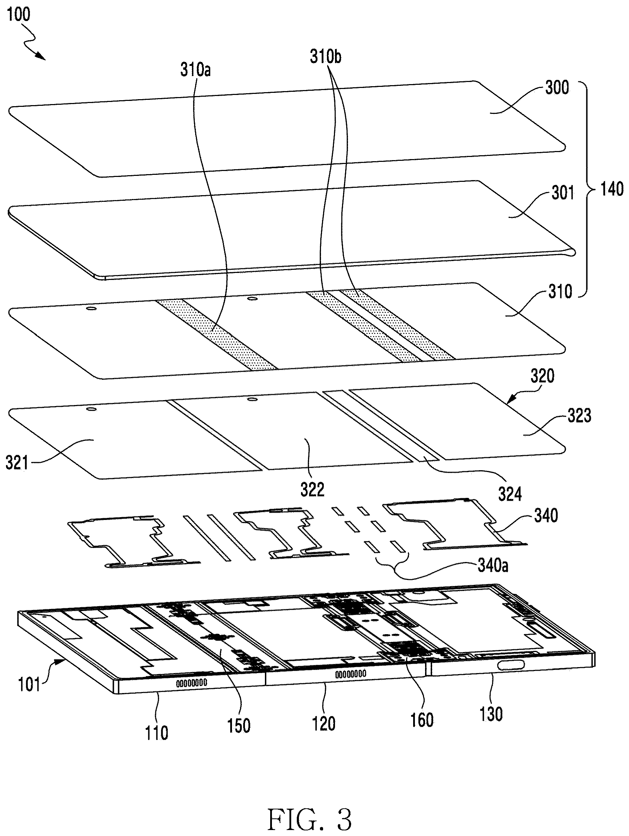

FIG. 3 is an exploded perspective view of an electronic device.

Referring to FIG. 3, an electronic device 100 may include a display 140, a waterproof member 340, and a housing structure 101.

According to an embodiment, the display 140 may include a cover layer 300, a display panel 301, a flexible plate 310, and a set of supporting plates 320.

The cover layer 300 may function as a cover glass or a window. The cover layer 300 may be at least partially transparent. The cover layer 300 may define at least a portion of a front surface of a housing (e.g., the housing structure 101 of FIG. 1A) or the electronic device 100. The display panel 301 may include a polarizing plate. The polarizing plate may reduce an amount of light reflected in the display panel 301 after being incident from the outside of the electronic device 100. As the amount of light reflected in the display panel 301 is reduced by the polarizing plate, visibility of the display 140 may be improved. In order to improve the visibility, the display panel 301 may include a color filter instead of the polarizing plate. It is not limited thereto, and the display panel 301 may include both the polarizing plate and the color filter. The display panel 301 may include a pixel layer. The pixel layer may be configured to provide visual information to the outside. The pixel layer may be configured to emit light of a designated color from each pixel to the outside. The pixel layer may be configured to operate by a thin film transistor. The display panel 301 may include a touch panel or a digitizer. The touch panel or the digitizer may be configured to receive an external input transmitted through a surface of the display 140.

The display 140 may be folded or unfolded by a first hinge structure 150 and a second hinge structure 160 according to a change in a state of the electronic device 100. For a change of the display 140, the cover layer 300 and a substrate of the display panel 301, configuring the display, may be formed from a flexible material. In order to support the display panel 301 formed from the flexible material, the display panel 301 may be disposed on the flexible plate 310 and the set of the supporting plates 320.

The flexible plate 310 may be disposed under the display panel 301. The flexible plate 310 may include portions 310a and 310b corresponding to a first foldable part (e.g., the first foldable portion 144 of FIG. 1A) of the display 140 and the second foldable part (e.g., the second foldable portion 145 of FIG. 1A) of the display 140.

Each of the portions 310a and 310b of the flexible plate 310 may have a pattern (e.g., a lattice pattern) including an opening, a slit, or a groove extending in a direction parallel to a folding axis of the hinge structures 150 and 160 to have ductility.

The set of the supporting plates 320 may be disposed under the flexible plate 310. The set of the supporting plates 320 may include a plurality of portions 321, 322, 323, and 324 separated from each other. The portion 321 disposed on the first housing part 110 may be disposed at a position corresponding to a first unfoldable portion 141 of the display 140. The portion 322 disposed on the second housing part 120 may be disposed at a position corresponding to a second unfoldable portion 142 of the display 140. The portion 323 disposed on the third housing part 130 may be disposed at a position corresponding to a third unfoldable portion 143 of the display 140. The portion 324 of the set of the supporting plates 320 may be partially disposed on the second hinge structure 160 that is wider than a width of the first hinge structure 150.

The portion 310b of the flexible plate 310 may include a plurality of patterns. For example, the portion 310b of the flexible plate 310 may include a first pattern including a plurality of openings and a second pattern including a plurality of openings. The portion 310b of the flexible plate 310 may include a section where an opening disposed between the first pattern and the second pattern is absent. The portion 324 of the set of the supporting plates 320 may be disposed in the section where the opening included in the portion 310b of the flexible plate 310 is absent. The portion 324 of the set of the supporting plates 320 may be formed of one or more portions.

The electronic device 100 may further include an adhesive member 340 disposed between the display 140 and the housing structure 101. The adhesive member 340 may be disposed on a supporting portion of the first housing part 110, the second housing part 120, and the third housing part 130. A portion of the adhesive member 340 may be disposed on the hinge structures 150 and 160. The adhesive member 340 may include a double-sided tape, a tape, an adhesive, or a waterproof tape.

According to the above-described embodiment, the electronic device 100 may support the display panel 301 on the relatively wide second hinge structure 160 by including the portion 324 of the set of the supporting plates 320. The portion 324 of the set of the supporting plates 320 may improve rigidity of the display panel 301 by additionally supporting the portion 322 of the set of the supporting plates 320 and a portion of the display panel 301 not supported by the portion 323.

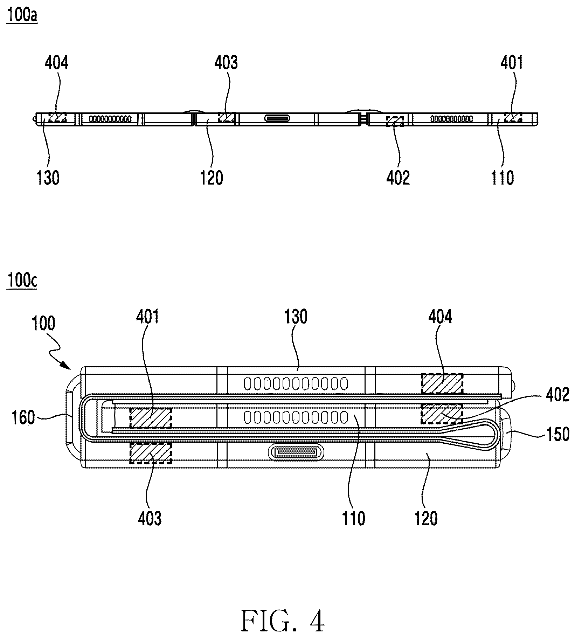

FIG. 4 illustrates a disposition between a position of a magnet and a hinge structure, disposed in an electronic device.

Referring to FIG. 4, an electronic device 100 may include magnets 401, 402, 403, and 404 configured to provide a force to maintain a folded state of the electronic device 100.

The first magnet 401 and the second magnet 402 may be disposed in a first housing part 110. The third magnet 403 may be disposed in s second housing part 120. The fourth magnet 404 may be disposed in a third housing part 130.

As the electronic device 100 changes from a first state 100a to a third state 100c, the first magnet 401 in the first housing part 110 may face the third magnet 403 in the second housing part 120. The second magnet 402 in the first housing part 110 may face the fourth magnet 404 in the third housing part 130.

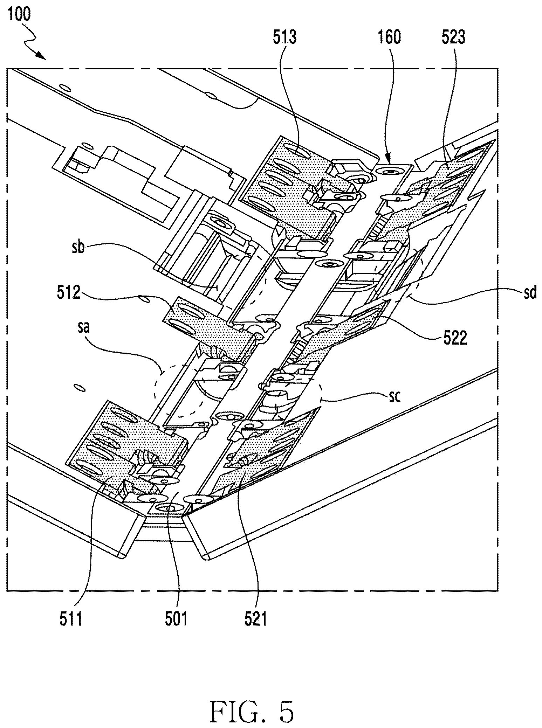

The second magnet 402 may be disposed close to a first hinge structure 150, and the third magnet 403 may be disposed close to a second hinge structure 160. As the third magnet 403 is disposed close to the second hinge structure 160, a disposition of a rotator for driving the second hinge structure 160 may be limited by the magnet 403. A position of the rotator of the second hinge structure 160 will be described later through FIG. 5.

FIG. 5 illustrates a connection relationship between a second hinge structure and a second housing part and a third housing part, disposed in the electronic device.

Referring to FIG. 5, a second hinge structure 160 may include a base 501 and rotators 511, 512, 513, 521, 522, and 523. The rotators 511, 512, 513, 521, 522, and 523 may be disposed to avoid the position of the magnet described in FIG. 4, and may be disposed to avoid other components. For avoidance of the magnet and the other components, the second hinge structure 160 may omit supporting plates (e.g., the first supporting plate 252 and the second supporting plate 253 of FIG. 2A) for an entire area in which the second hinge structure 160 is disposed. There may be spaces sa, sb, sc, and sd between the omitted supporting plates, and the rotators for the avoidance of the component or magnet.

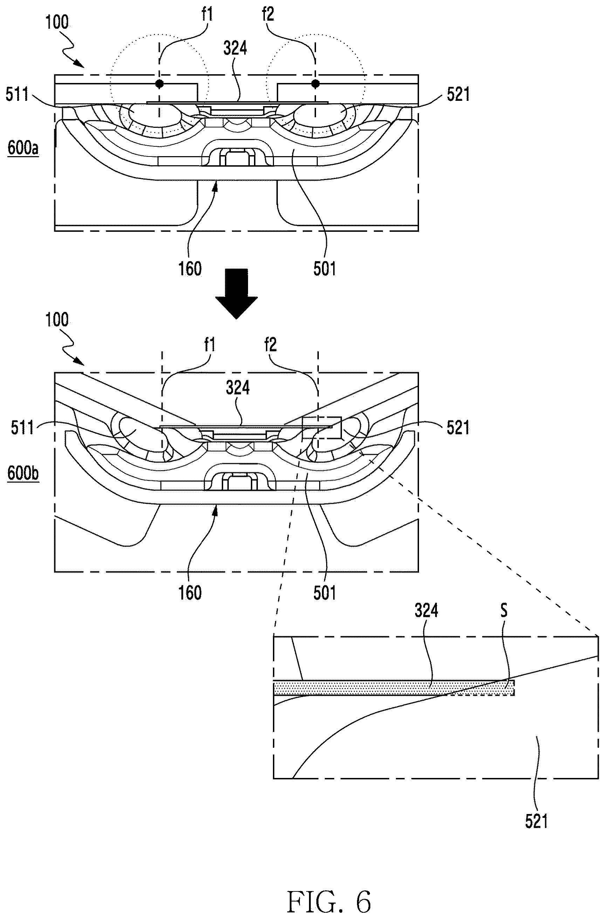

For example, the first rotator 511, the second rotator 512, and the third rotator 513 that share a folding axis with each other may be spaced apart from each other for the avoidance between the other components. The fourth rotator 521, the fifth rotator 522, and the sixth rotator 523 that share another folding axe may be spaced apart from each other for the avoidance between the other components. The space sa may be disposed between the first rotator 511 and the second rotator 512. The space sb may be disposed between the second rotator 512 and the third rotator 513. The space sc may be disposed between the fourth rotator 521 and the fifth rotator 522. The space sd may be disposed between the fifth rotator 522 and the sixth rotator 523. Since a back surface of a display 140 is not constantly supported by the spaces sa, sb, sc, and sd, a structure for rigidity of a portion of the display 140 disposed on the second hinge structure 160 may be required. The structure may be the portion 324 of the set of the supporting plates 320 of FIG. 3. A description with respect to the portion 324 of the set of the supporting plate 320 will be described in detail below in FIG. 6.

FIG. 6 indicates a section that interferes with a portion of a set of supporting plates disposed on the second hinge structure.

Referring to FIG. 6, in a state 600a in which an electronic device 100 is unfolded, a portion 324 of a set of supporting plates 320 may be disposed on a base 501 connected to a first rotator 511 and a fourth rotator 521 of a second hinge structure 160. The portion 324 of the set of the supporting plates 320 disposed on the base 501 should be able to avoid interference with rotators 511 and 521 while a state of the electronic device 100 changes. In case that the portion 324 of the set of the supporting plates 320 is longer than a distance between an axis f1 of the first rotator 511 and an axis f2 of the fourth rotator 521, interference may occur with the first rotator 511 and the fourth rotator 521 in a state 600b that changes to a folded state of the electronic device 100. For example, in case that the portion 324 of the set of the supporting plates 320 is longer than the distance between the axis f1 of the first rotator 511 and the axis f2 of the fourth rotator 521, there may be a portion S overlapping the first rotator 511 and the fourth rotator 521 in the state 600b that changes to the folded state of the electronic device 100. In order to reduce damage to the set of the supporting plates 320, a width of the portion 324 of the set of the supporting plates 320 may be narrower than the distance between the axis f1 of the first rotator 511 and the axis f2 of the fourth rotator 521. The portion 324 of the set of the supporting plates 320 may be aligned to the base 501. For example, the portion 324 of the set of the supporting plates 320 may be aligned with respect to the base 501, so as to be disposed between the axis f1 of the first rotator 511 and the axis f2 of the fourth rotator 521. The portion 324 of the set of the supporting plates 320 disposed between the axis f1 of the first rotator 511 and the axis f2 of the fourth rotator 521 may not interfere with the rotators 511 and 521 even with the change in the state of the electronic device 100.

The portion 324 of the set of supporting plates 320 in contact with the base 501 may be adhered to the base 501. As the portion 324 of the set of the supporting plates 320 is disposed between the axes f1 and f2 of the rotators 511 and 521 by being aligned to the base 501, the set of supporting plates 320 may not be damaged and may stably support a display 140.

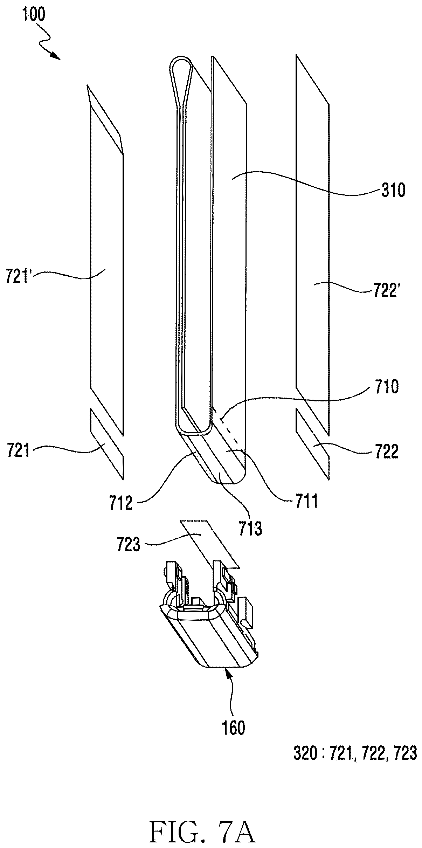

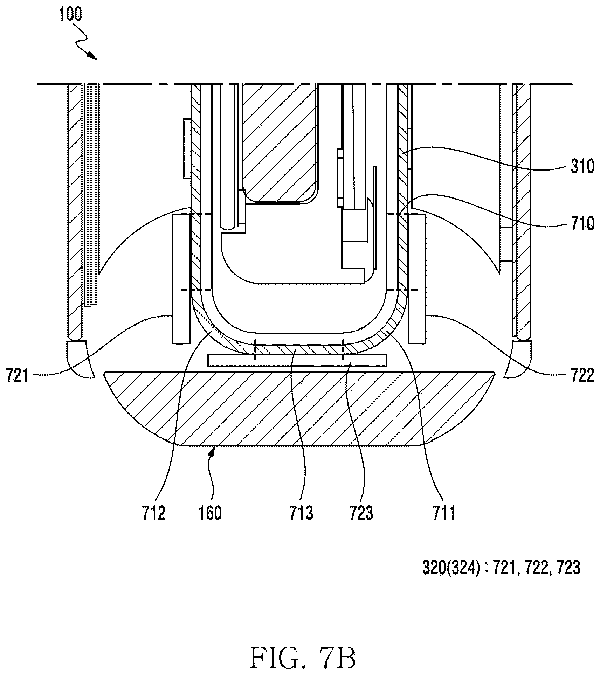

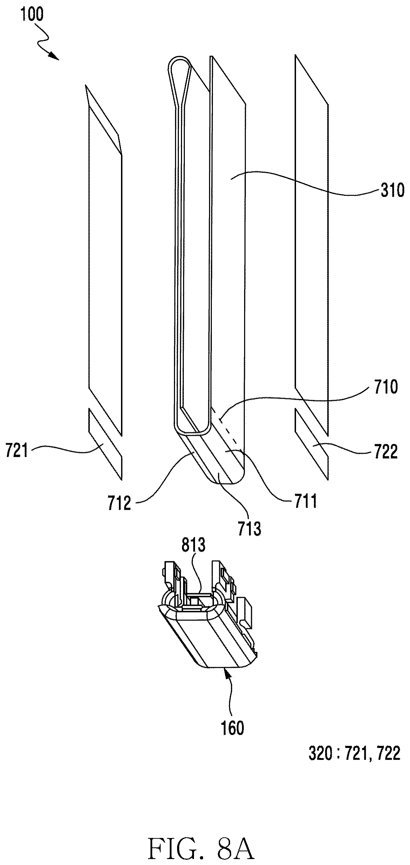

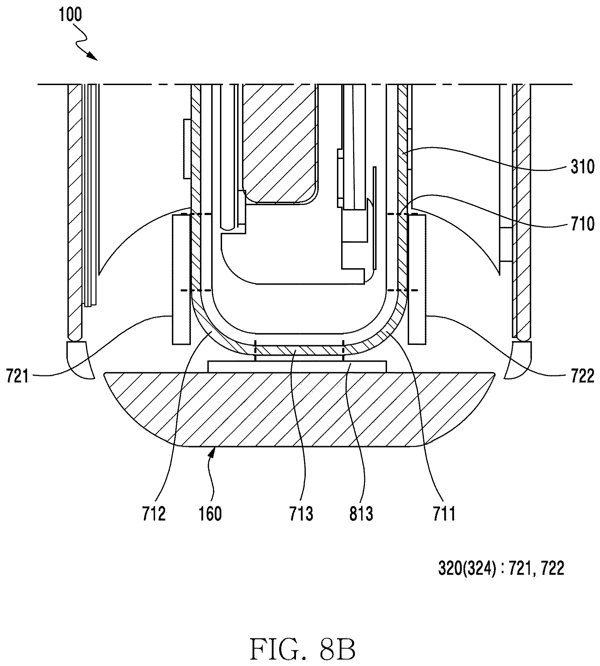

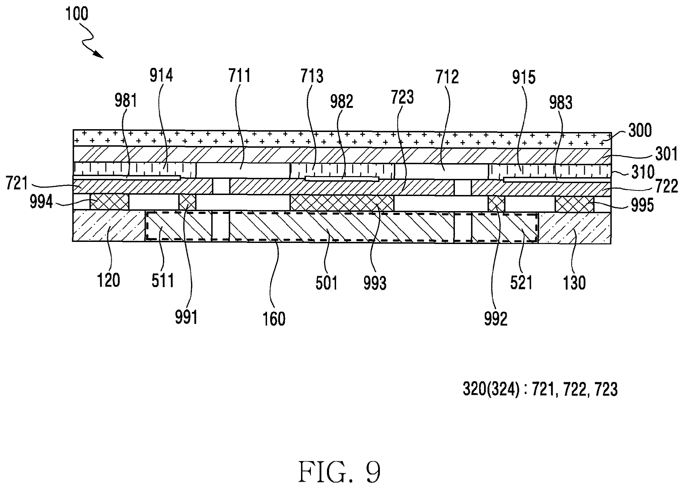

FIG. 7A is a partially exploded perspective view illustrating a relationship between a second hinge structure and a set of supporting plates in a folded state. FIG. 7B illustrates a structure of a portion of a set of supporting plates disposed on a second hinge structure in a folded state of a multi foldable electronic device. FIG. 8A is a partially exploded perspective view illustrating a relationship between a second hinge structure and a set of supporting plates in a folded state. FIG. 8B illustrates a structure of a portion of a set of supporting plates disposed on a second hinge structure in a folded state of a multi foldable electronic device. FIG. 9 illustrates a structure of a portion of a set of supporting plates disposed on a second hinge structure in an unfolded state of a multi foldable electronic device.

Referring to FIGS. 7A, 7B, and 9, a set of supporting plates 320 may include rigid plates 721, 722, and 723 corresponding to a portion 324 disposed on a second hinge structure 160. It has been described that the portion 324 of the set of the supporting plates 320 of FIG. 3 is provided as one, it may be provided as a plurality of spaced plates such as the rigid plates 721, 722, and 723. The rigid plates 721, 722, and 723 may correspond to a second foldable portion 145 of a display 140. For example, a flexible plate 310 may include a lattice portion 710 corresponding to the second foldable portion 145. The lattice portion 710 may include a first pattern portion 711 and a second pattern portion 712 in which an opening or slits are disposed, and a first portion 713 disposed between the first pattern portion 711 and the second pattern portion 712. Referring to FIG. 9, the lattice portion 710 may further include a second portion 914 extending from the first pattern portion 711 and a third portion 915 extending from the second pattern portion 712.

The lattice portion 710 may be surrounded by the second hinge structure 160. Since the lattice portion 710 has ductility at the first pattern portion 711 and the second pattern portion 712, the lattice portion 710 may be bent. The display 140 may be bent at the first pattern portion 711 and the second pattern portion 712 by the second hinge structure 160.

The first rigid plate 721 may be disposed between the flexible plate 310 and a first rotator 511 of the second hinge structure 160, and between the flexible plate 310 and a portion of a supporting portion of the second housing part 120. The first rigid plate 721 may be in contact with the second portion 914 positioned next to the first pattern portion 711 of the flexible plate 310. The second portion 914 may be positioned in a portion of the second foldable portion 145 corresponding to the second hinge structure 160 and a second unfoldable portion 142. The first rigid plate 721 may be disposed under a portion of the first pattern portion 711, and the second portion 914, in an unfolded state (e.g., the first state 100a of the electronic device 100 of FIG. 1A) of the electronic device 100. The first rigid plate 721 may be in contact with the second portion 914. A surface of the first rigid plate 721 may be attached to the second portion 914. Another surface of the first rigid plate 721 may be attached to the supporting portion of the second housing part 120 and the first rotator 511 of the second hinge structure 160. An adhesive member 991 may be interposed between the first rigid plate 721 and the first rotator 511, thereby coupling the first rotator 511 of the second hinge structure 160 and the first rigid plate 721. The adhesive member 991 may correspond to the adhesive member 340a of FIG. 3. The rotators 511, 512, and 513 of FIG. 5 corresponding to the first rotator 511 to which the adhesive member 991 is attached are separated from each other, so that the adhesive member 991 may be a plurality of tapes. The adhesive member 994 may be interposed between the first rigid plate 721 and the supporting portion of the second housing part 120, thereby coupling the second housing part 120 and the first rigid plate 721.

The second rigid plate 722 may be disposed between the flexible plate 310 and a fourth rotator 521 of the second hinge structure 160 and between the flexible plate 310 and a portion of a supporting portion of the third housing part 130. The second rigid plate 722 may be in contact with the third portion 915 positioned next to the second pattern portion 712 of the flexible plate 310. The third portion 915 may be positioned in a portion of the second foldable portion 145 corresponding to the second hinge structure 160 and a third unfoldable portion 143. The second rigid plate 722 may be disposed under a portion of the second pattern portion 712, and the third portion 915, in the unfolded state (e.g., the first state 100a of the electronic device 100 of FIG. 1A) of the electronic device 100. The second rigid plate 722 may be in contact with the third portion 915. A surface of the second rigid plate 722 may be attached to the third portion 915. Another surface of the second rigid plate 722 may be attached to the supporting portion of the third housing part 130 and the fourth rotator 521 of the second hinge structure 160. An adhesive member 992 may be interposed between the second rigid plate 722 and the fourth rotator 521, thereby coupling the fourth rotator 521 of the second hinge structure 160 and the second rigid plate 722. The adhesive member 992 may correspond to the adhesive member 340a of FIG. 3. The rotators 521, 522, and 523 of FIG. 5 corresponding to the fourth rotator 521 to which the adhesive member 992 is attached are separated from each other, so that the adhesive member 992 may be a plurality of tapes. The adhesive member 995 may be interposed between the second rigid plate 722 and the supporting portion of the third housing part 130, thereby coupling the third housing part 130 and the second rigid plate 722.

The third rigid plate 723 may be disposed between the second hinge structure 160 and the flexible plate 310. The third rigid plate 723 may be in contact with the first portion 713 of the flexible plate 310. The third rigid plate 723 may be attached to the first portion 713 of the flexible plate 310. The third rigid plate 723 may be attached to the base 501 of the second hinge structure 160. An adhesive member 993 may be interposed between the third rigid plate 723 and the base 501, thereby coupling the base 501 of the second hinge structure 160 and the third rigid plate.

The electronic device 100 may further include a fourth rigid plate 721' and a fifth rigid plate 722'. The fourth rigid plate 721' may be attached to the supporting portion of the second housing part 120, and the fifth rigid plate 722' may be attached to the supporting portion of the third housing part 130. The fourth rigid plate 721' may be spaced apart from the first rigid plate 721. The fifth rigid plate 722' may be spaced apart from the second rigid plate 722.

Referring to FIGS. 8A and 8B, an electronic device 100 may omit a third rigid plate 723 from the electronic device 100 of FIGS. 7A and 7B. According to the omission of the third rigid plate 723, a second hinge structure 160 may include a center plate 813 disposed under a first portion 713 of a flexible plate 310. The center plate 813 may be disposed in a component of the second hinge structure 160 and may be spaced apart from the flexible plate 310. For example, the center plate 813 may be attached to one of components of the second hinge structure 160, and may be spaced apart from the first portion 713 of the flexible plate 310 while facing the first portion 713.

A set of supporting plates 320 may include rigid plates 721 and 722. The rigid plates 721 and 722 may be disposed in a portion corresponding to a second foldable portion 145 of a display 140.

A first rigid plate 721 may be disposed between the flexible plate 310 and a first rotator 511 of a second hinge structure 160 and between the flexible plate 310 and a portion of a supporting portion of a second housing part 120. The first rigid plate 721 may be in contact with a second portion 914 positioned next to a first pattern portion 711 of the flexible plate 310. The second portion 914 may be positioned in a portion of the second foldable portion 145 corresponding to the second hinge structure 160 and a second unfoldable portion 142. The first rigid plate 721 may be disposed under a portion of the first pattern portion 711 and the second portion 914, in an unfolded state (e.g., the first state 100a of the electronic device 100 of FIG. 1A) of the electronic device 100. The first rigid plate 721 may be in contact with the second portion 914. A surface of the first rigid plate 721 may be attached to the second portion 914. Another surface of the first rigid plate 721 may be attached to the supporting portion of the second housing part 120 and the first rotator 511 of the second hinge structure 160. An adhesive member 991 may be interposed between the first rigid plate 721 and the first rotator 511, thereby coupling the first rotator 511 of the second hinge structure 160 and the first rigid plate 721. The adhesive member 991 may correspond to the adhesive member 340a of FIG. 3. The rotators 511, 512, and 513 of FIG. 5 corresponding to the first rotator 511 to which the adhesive member 991 is attached are separated from each other, so that the adhesive member 991 may be a plurality of tapes. An adhesive member 994 may be interposed between the first rigid plate 721 and the supporting portion of the second housing part 120, thereby coupling the second housing part 120 and the first rigid plate 721.

A second rigid plate 722 may be disposed between the flexible plate 310 and a fourth rotator 521 of the second hinge structure 160 and between the flexible plate 310 and a portion of a supporting portion of a third housing part 130. The second rigid plate 722 may be in contact with a third portion 915 positioned next to a second pattern portion 712 of the flexible plate 310. The third portion 915 may be positioned in a portion of the second foldable portion 145 corresponding to the second hinge structure 160 and a third unfoldable portion 143. The second rigid plate 722 may be disposed under a portion of the second pattern portion 712 and the third portion 915, in the unfolded state (e.g., the first state 100a of the electronic device 100 of FIG. 1A) of the electronic device 100. The second rigid plate 722 may be in contact with the third portion 915. A surface of the second rigid plate 722 may be attached to the third portion 915. Another surface of the second rigid plate 722 may be attached to the supporting portion of the third housing part 130 and the fourth rotator 521 of the second hinge structure 160. An adhesive member 992 may be interposed between the second rigid plate 722 and the fourth rotator 521, thereby coupling the fourth rotator 521 of the second hinge structure 160 and the second rigid plate 722. The adhesive member 992 may correspond to the adhesive member 340a of FIG. 3. The rotators 521, 522, and 523 of FIG. 5 corresponding to the fourth rotator 521 to which the adhesive member 992 is attached are separated from each other, so that the adhesive member 992 may be a plurality of tapes. An adhesive member 995 may be interposed between the second rigid plate 722 and the supporting portion of the third housing part 130, thereby coupling the third housing part 130 and the second rigid plate 722.

The center plate 813 may be attached to a component of the second hinge structure 160 and spaced apart from the flexible plate 310. The center plate 813 may be spaced apart from the first portion 713 of the flexible plate 310. The second hinge structure 160 may include the center plate 813. The center plate 813 may be attached to a base 501 of the second hinge structure 160. An adhesive member 993 may be interposed between the center plate 813 and the base 501, thereby coupling the base 501 of the second hinge structure 160 and the center plate 813.

The second hinge structure 160 including the center plate 813 of FIGS. 8A and 8B may be applied to FIG. 9 in the same manner.

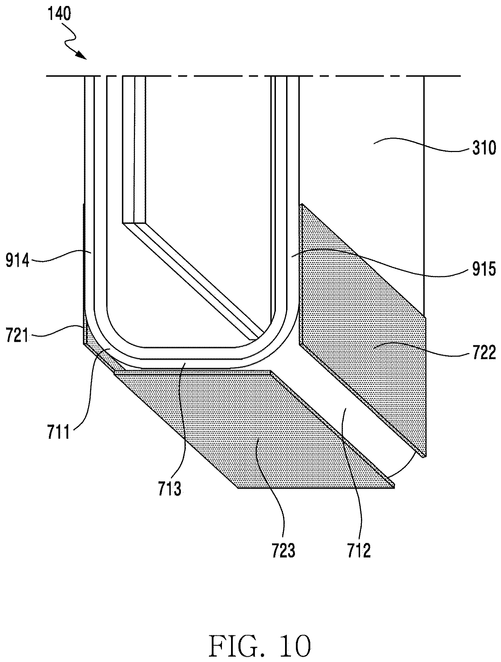

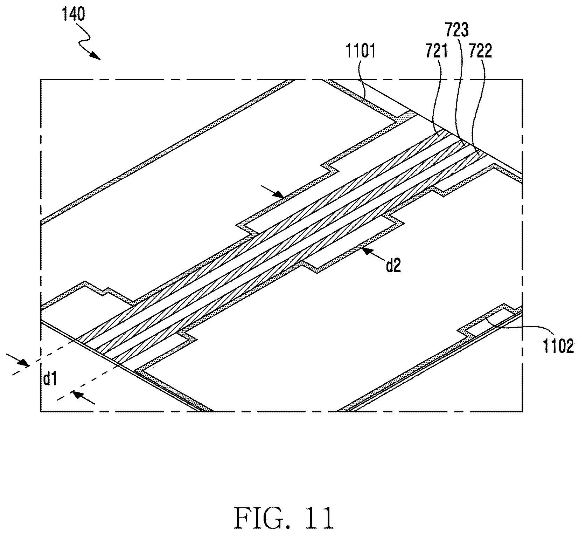

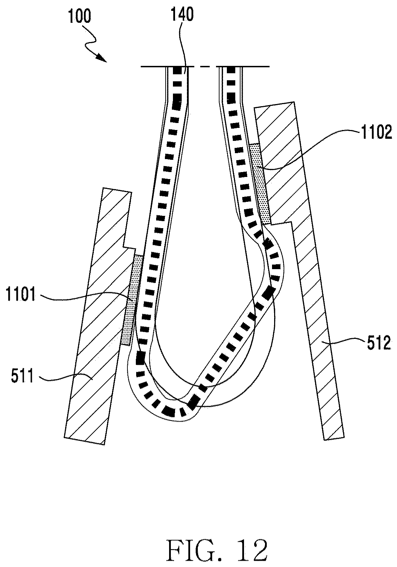

FIGS. 10 and 11 illustrate a disposition of a portion of a set of supporting plates a waterproof member disposed on a back surface of a display according to an embodiment. FIG. 12 illustrates an example of display deformation in case that a set of supporting plates is omitted.

Referring to FIGS. 10 and 11, a first rigid plate 721, a second rigid plate 722, and a third rigid plate 723 may be attached to a flexible plate 310.

The first rigid plate 721, the second rigid plate 722, and the third rigid plate 723 may be attached to a portion of a flexible plate 310 except for a first pattern portion 711 and a second pattern portion 712. For example, the third rigid plate 723 may be attached to a first portion 713 of the flexible plate 310 disposed between the first pattern portion 711 and the second pattern portion 712. The first rigid plate 721 may be attached to a second portion 914 disposed next to the first pattern portion 711. The second rigid plate 722 may be attached to a third portion 915 disposed next to the second pattern portion 712.

Referring to FIG. 11, a first rigid plate 721, a second rigid plate 722, and a third rigid plate 723 may be spaced apart from each other. For example, the first rigid plate 721 may be approximately 1 to 2 mm apart from a side of the third rigid plate 723, and the second rigid plate 722 may be approximately 1 to 2 mm apart from another side of the third rigid plate 723.

The third rigid plate 723 of FIGS. 10 and 11 may be replaced with the center plate 813 of the second hinge structure 160 of FIGS. 8A and 8B.

Referring to FIG. 12, a sum of a distance from an end portion of a third rigid plate 723 to a point contacting a first potion 713, a distance from an end portion of a first rigid plate 721 and a point contacting a second potion 914, and a separation distance between the first rigid plate 721 and the third rigid plate 723 may be equal to a length of a first pattern portion 711. The length of the first pattern portion 711 may be 1/4 of a circumference having a radius of curvature of the first pattern portion 711 in a state in which the electronic device 100 is bent. In a folded state of an electronic device 100, a distance between the first rigid plate 721 of the set of the supporting plates and a bottom surface of the second hinge structure 160 or a distance between the second rigid plate 722 of the set of the supporting plates 320 and the bottom surface of the second hinge structure 160 may be shorter than the third rigid plate 723 of the set of the supporting plates 320 and the bottom surface of the second hinge structure 160.

The first rigid plate 721, the second rigid plate 722, and the third rigid plate 723 may be spaced apart from each other and extend in a direction parallel to a folding axis. The first rigid plate 721, the second rigid plate 722, and the third rigid plate 723 may extend from a periphery of a display overlapping the second hinge structure 160 to another periphery. The first rigid plate 721 may be disposed between adhesive members 1101 and 1102 attached to a display 140. The adhesive members 1101 and 1102 may be a double-sided tape or a waterproof tape. The adhesive members 1101 and 1102 may be disposed between a housing (e.g., the housing structure 101 of FIG. 1A) and the display 140. The adhesive member 1101 may be disposed between a supporting portion of a second housing part 120 and the display 140, and the adhesive member 1102 may be disposed between a support portion of a third housing part 130 and the display 140. A hinge structure (e.g., the second hinge structure 160 of FIG. 3) may be disposed in a separation space between the adhesive members 1101 and 1102. Since double-sided tapes (e.g., the adhesive members 991 and 992 of FIG. 9) disposed on the second hinge structure 160 are separated from each other, rigidity of the display 140 may be insufficient. In order to reinforce the rigidity of the display 140, the rigid plates 721 and 722 may be disposed on the separated adhesive members.

Referring to FIG. 12, the adhesive members 1101 and 1102 may include bent portions according to a shape of the hinge structure. Facing portions of the adhesive members 1101 and 1102 may be asymmetrical. In case that the adhesive members 1101 and 1102 or the tape are asymmetrical, distribution of stress applied to the display 140 may be different. As the stress applied according to deformation of the display 140 changes, a folding shape of the display 140 may be asymmetric in the folded state (e.g., the third state 100c) of the electronic device 100. A portion (e.g., the p320 art 324 of FIG. 3) of the set of the supporting plates 320 may be disposed in an area in which the rigidity of the display 140 is relatively insufficient.

Referring back to FIGS. 10 and 11, a distance between the adhesive members 1101 and 1102 including the bent portion may vary according to a position. For example, in a portion where a width of the second hinge structure 160 is narrow, the distance between the adhesive members 1101 and 1102 may be a first distance d1, which is the minimum distance. In a portion where the width of the second hinge structure 160 is wide, the distance between the adhesive members 1101 and 1102 may be a second distance d2, which is the maximum distance.

The first rigid plate 721, the second rigid plate 722, and the third rigid plate 723 may be disposed within the first distance d1. The first rigid plate 721, the second rigid plate 722, and the third rigid plate 723 may be disposed between the waterproof member 1101 and the waterproof member 1102. For example, the first rigid plate 721 and the second rigid plate 722 may be disposed within the first distance d1. For example, the first distance d1 may be greater than a sum of a width of the first rigid plate 721, a width of the second rigid plate 722, and a separation distance between the first rigid plate 721 and the second rigid plate 722.

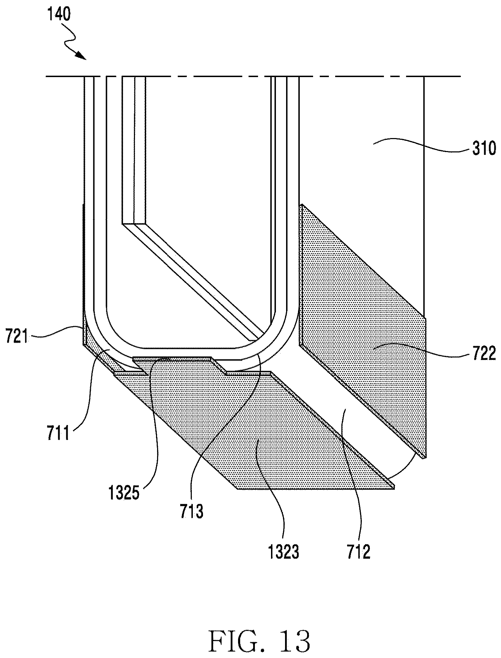

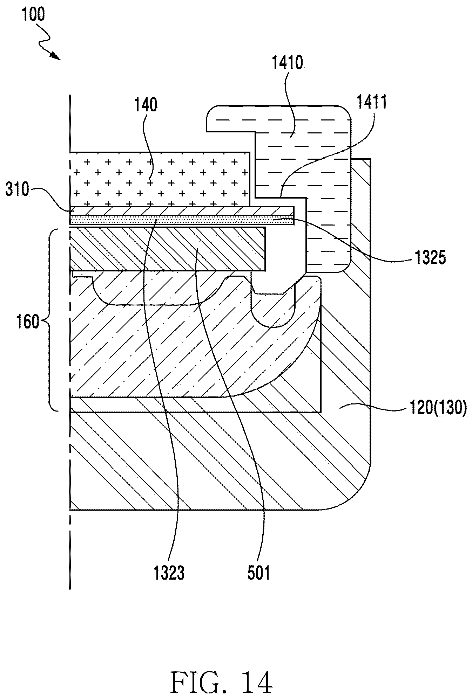

FIG. 13 illustrates a set of supporting plates including a protruding portion. FIG. 14 is a cross-sectional view illustrating that a protruding portion operates as a stopper.

Referring to FIG. 13, a display 140 may include a third rigid plate 1323 having a shape different from that of the third rigid plate 723 of FIG. 10. The third rigid plate 1323 may include a protruding portion 1325 protruding from a periphery of a flexible plate 310 included in the display 140. The protruding portion 1325 may protrude in a direction corresponding to a folding axis.

A foldable portion of the display 140 may be finely moved according to a change in a state of an electronic device 100. For example, in a folded state of the electronic device 100, the foldable portion of the display 140 may be moved toward a hinge structure. In an unfolded state of the electronic device 100, the foldable portion of the display 140 may be moved in a direction in which a front surface of the electronic device 100 faces.

In order to prevent the display 140 from being separated from the hinge structure according to a movement of the display 140, the electronic device 100 may further include a stopper.

Referring to FIG. 14, an electronic device 100 may further include a protection member 1410 for protecting a display. The protection member 1410 may be disposed at both ends of each of hinge structures 150 and 160. The protection member 1410 may cover a portion of a periphery portion of the display 140. The protection member 1410 may prevent or reduce foreign matter from flowing into the electronic device 100 through a gap between the periphery of the display 140 and housing parts 120 and 130.

A protruding portion 1325 of a third rigid plate 1323 disposed on a base 501 of a hinge structure 160 may function as a stopper by contacting a locking portion 1411 on an inner surface of the protection member 1410 when the display 140 moves to a front surface of the electronic device 100 as the electronic device 100 changes to an unfolded state. The locking portion 1411 may be a step portion corresponding to a shape of the periphery of the display 140 and the protruding portion 1325 on the inner surface of the protection member 1410. The electronic device 100 may restrict separation of the display 140 by the locking portion 1411 and the protruding portion 1325.

The third rigid plate 1323 of FIGS. 13 and 14 may be replaced with the center plate 813 of FIGS. 8A and 8B. The center plate 813 may further include a portion corresponding to the protruding portion 1325.

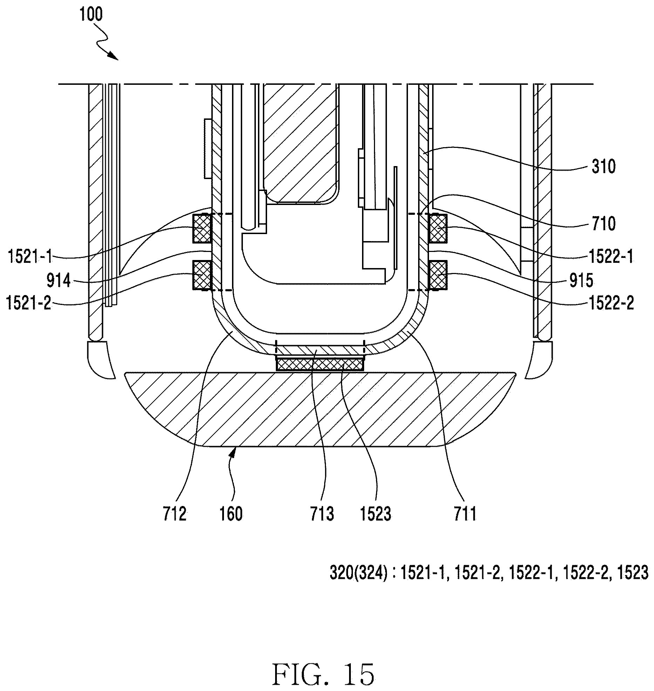

FIG. 15 illustrates an example of a portion of a set of supporting plates disposed on a second hinge structure.

Referring to FIG. 15, an electronic device 100 may include a plurality of rigid plates 1521-1, 1521-2, 1522-1, 1522-2, and 1523, corresponding to a portion 324 of a set of supporting plates 320 disposed on a second hinge structure 160.

The plurality of rigid plates 1521-1, 1521-2, 1522-1, 1522-2, and 1523 may be disposed on a back surface of a flexible plate 310. For example, the plurality of rigid plates 1521-1, 1521-2, 1522-1, 1522-2, and 1523 may be disposed in a second foldable portion (e.g., the second foldable portion 145 of FIG. 1A) of the flexible plate 310. The plurality of rigid plates 1521-1, 1521-2, 1522-1, 1522-2, and 1523 may be disposed in a first portion 713, a second portion 914, and a third portion 915 of the second foldable portion except for a first pattern portion 711 and a second pattern portion 712.

A first set of the rigid plates 1521-1 and 1521-2 may be disposed in the second portion 914. A second set of the rigid plates 1522-1 and 1522-2 may be disposed in the third portion 915. The rigid plate 1523 may be disposed in the first portion 713.

The rigid plates 1521-1, 1521-2, 1522-1, and 1522-2 disposed in the second portion 914 and the third portion 915 may be spaced apart and disposed, thereby reinforcing rigidity of a foldable portion of a display while providing ductility of the display.

Among the rigid plates 1521-1, 1521-2, 1522-1, 1522-2, and 1523, the rigid plate 1523 may be replaced with the center plate 813 of FIGS. 8A and 8B.

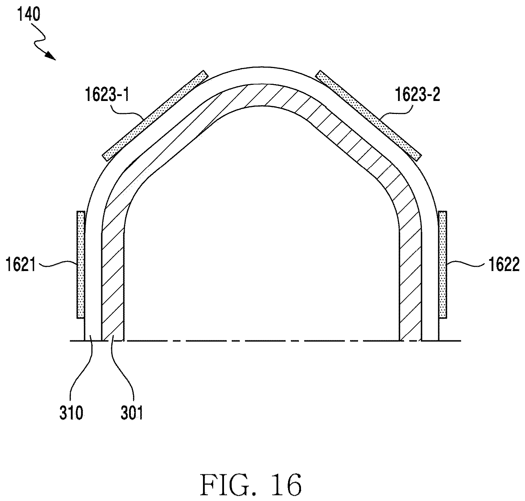

FIGS. 16, 17, 18, and 19 illustrate examples of a portion of a set of supporting plates disposed on a second hinge structure.

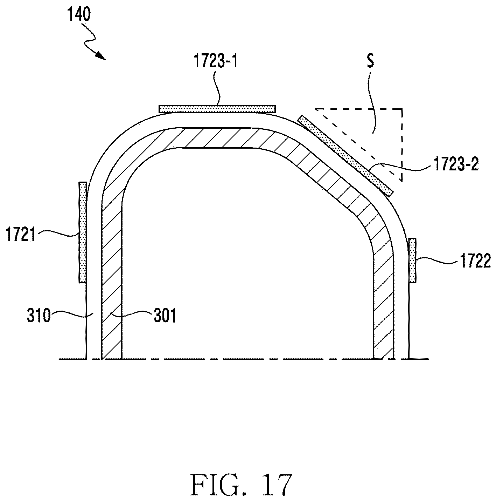

Referring to FIGS. 16 and 17, a second foldable portion (e.g., the second foldable portion 145 of FIG. 1A) of a display 140 may include three or more deformation portions, differently from the second foldable portion 145 including the two deformation portions 145a and 145b of FIG. 1C.

Referring to FIG. 16, a flexible plate 310 of the display 140 supporting a display panel 301 may include a first deformation portion 1645a, a second deformation portion 1645b, and a third deformation portion 1645c. A first rigid plate 1621, a second rigid plate 1622, a third rigid plate 1623-1, and a fourth rigid plate 1623-2 may be disposed in planar portions 1645d, 1645e, 1645f, and 1645g disposed between the deformation portions.

Referring to FIG. 17, a flexible plate 310 of a display 140 supporting a display panel 301 may include a first deformation portion 1745a, a second deformation portion 1745b, and a third deformation portion 1745c. A first rigid plate 1721, a second rigid plate 1722, a third rigid plate 1723-1, and a fourth rigid plate 1723-2 may be disposed in planar portions 1745d, 1745e, 1745f, and 1745g disposed between the deformation portions. The third rigid plate 1723-1 and the fourth rigid plate 1723-2 may be asymmetrically disposed differently from FIG. 16.

For example, the third rigid plate 1723-1 may be attached to a base (e.g., the base 501 of FIG. 5) of a second hinge structure (e.g., the second hinge structure 160 of FIG. 1C) similar to the third rigid plate 723 of FIG. 10. The fourth rigid plate 1723-2 may be spaced apart from the base and have an inclination with respect to the base in a folded state of an electronic device 100. A hinge structure, a magnet, or other mechanism may be disposed in a separated space g between the fourth rigid plate 1723-2 and the base.

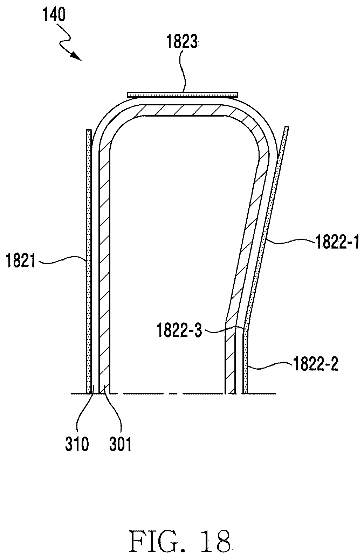

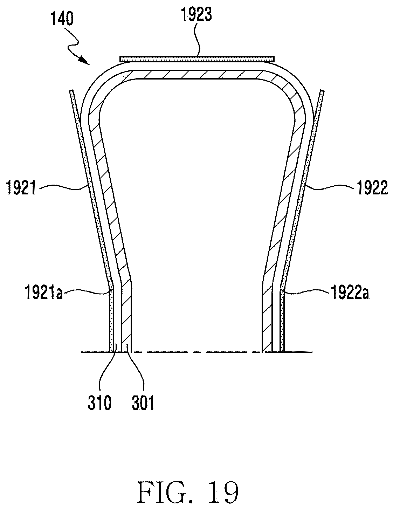

Referring to FIGS. 18 and 19, a second hinge structure 160 may have a reverse rotation section similar to a first hinge structure 150. A display 140 may further include bent portions by a hinge structure including the reverse rotation section.

Referring to FIG. 18, a portion of rotators on a side among rotators of the second hinge structure 160 may reversely rotate. The display 140 may include a first rigid plate 1821, a second rigid plate 1822, and a third rigid plate 1823, of a set of supporting plates 320. The third rigid plate 1823 may be disposed on a base 501 of the second hinge structure 160. The first rigid plate 1821 may be disposed at a position corresponding to rotators on another side that rotate forward. The second rigid plate 1822 may include a first portion 1822-1, a second portion 1822-2, and a bent portion 1822-3. While changing to a folded state of the electronic device 100, the second portion 1822-2 may reversely rotate differently from the first portion 1822-1 with respect to the bent portion 1822-3. The bent portion 1822-3 may be disposed between the first portion 1822-1 and the second portion 1822-2, and a fine opening or a fine notch may be formed. The bent portion 1822-3 may be formed to be thinner than the first portion 1822-1 and the second portion 1822-2.

Referring to FIG. 19, a portion of the rotators of the second hinge structure 160 may reversely rotate. The second hinge structure 160 may be deformed to be symmetrical to each other. The display 140 may include a first rigid plate 1921, a second rigid plate 1922, and a third rigid plate 1933 of the set of the supporting plates 320. The third rigid plate 1933 may be disposed on the base 501 of the second hinge structure 160. Each of the first rigid plate 1921 and the second rigid plate 1922 disposed on the rotators of the second hinge structure 160 including the reverse rotation section may include corresponding bent portions 1921a and 1921b, respectively. The first rigid plate 1921 and the second rigid plate 1922 may be similar to the second rigid plate 1822 of FIG. 18.

The rigid plate 1823 of FIG. 18 and the rigid plate 1923 of FIG. 19 can be replaced with the center plate 813 of FIGS. 8A and 8B.

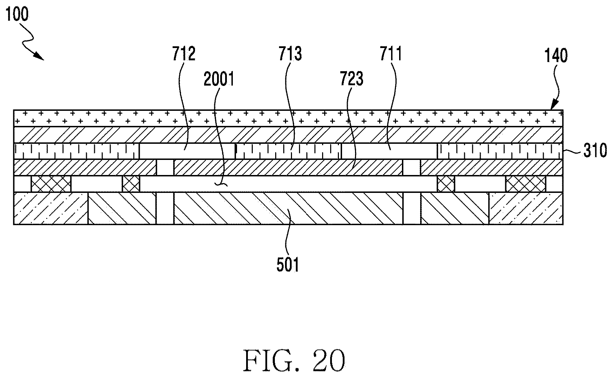

FIGS. 20, 21, and 22 illustrate an exemplary structure between a portion of a set of supporting plates disposed on the second hinge structure and a hinge structure.

FIG. 20 illustrates a configuration in which the adhesive member 993 is omitted from the display 140 of FIG. 9. A display 140 of FIG. 20 may be the same or similar except for the adhesive member 993 among the display 140 of FIG. 9.

Referring to FIG. 20, an electronic device 100 may provide a space between a third rigid plate 723 of a set of supporting plates 320 disposed under a first pattern 711, a second pattern 712, and a first portion 713 of a flexible plate 310, and a base 501 of a second hinge structure 160. For example, the third rigid plate 723 may be spaced apart from the base 501 of the second hinge structure 160.

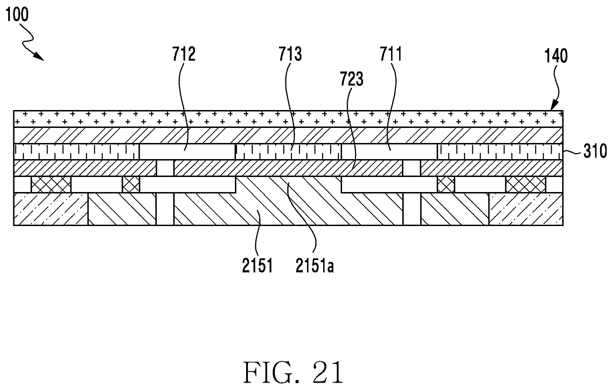

FIG. 21 illustrates a configuration in which the adhesive member 993 is omitted from the display 140 of FIG. 9 and the base 501 is deformed. A display 140 of FIG. 21 may be the same or similar except for the adhesive member 993 and the base 501 of the second hinge structure 160 among the display 140 of FIG. 9.

Referring to FIG. 21, a base 2151 may include a protruding portion 2151a to fill a space between the third rigid plate 723 of the set of supporting plates 320 disposed under the first pattern portion 711, the second pattern portion 712, and the first portion 713 of the flexible plate 310, and the base 501 of the second hinge structure 160. For example, the third rigid plate 723 may be in contact with the protruding portion 2151a of the base 2151 of the second hinge structure 160. The protruding portion 2151a of the base 2151 may protrude toward the third rigid plate 723.

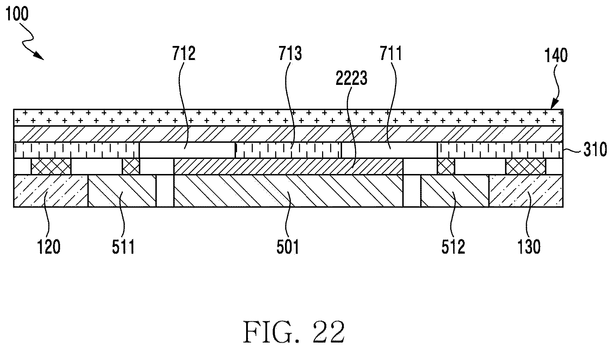

FIG. 22 illustrates a configuration in which the adhesive member 993 is omitted from the display 140 of FIG. 9, and the segmented portions of the set of the supporting plates 320 are omitted. A display 140 of FIG. 22 may be the same as or similar except for a configuration of the adhesive member 993 and the set of the supporting plates 320 among the display 140 of FIG. 9.

Referring to FIG. 22, one plate 2223 may be disposed in a portion 324 of the set of the supporting plates 320. The plate 2223 may be disposed on the base 501 of the second hinge structure 160. The plate 2223 may not be disposed on a first rotator 511 and a fourth rotator 521 of the second hinge structure 160, and may be configured to be connected to a lattice plate through adhesive members. The plate 2223 may be interposed between the flexible plate 310 and the base 501 of the second hinge structure 160. It has been described that the adhesive member between the plate 2223 and the flexible plate 310 is omitted, but it is not limited thereto.

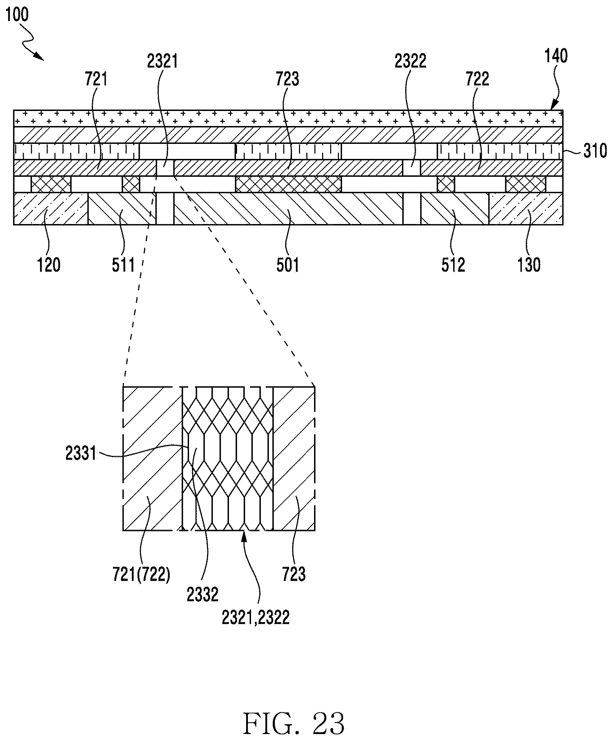

FIG. 23 illustrates an exemplary structure of an elastic portion of a set of supporting plates disposed on a second hinge structure.

FIG. 23 illustrates a configuration further including connection structures 2321 and 2322 disposed on rigid plates 721, 722, and 723 in the display 140 of FIG. 9.

Referring to FIG. 23, it may be the same as the display 140 of FIG. 9 except for the connection structures 2321 and 2322.

A first rigid plate 721 disposed on a second housing part 120 and a first rotator 511, a second rigid plate 722 disposed on a third housing part 130 and a second rotator 512, and a third rigid plate 723 disposed on the second rigid plate 722 and a base 501 may be connected to each other through the connection structures 2321 and 2322.

The connection structures 2321 and 2322 may include a structure having ductility so as to be bent in a bent state of an electronic device 100.

The first connection structure 2321 may connect the first rigid plate 721 and the third rigid plate 723 to each other. The second connection structure 2322 may connect the second rigid plate 722 and the third rigid plate 723 to each other.

The first connection structure 2321 and the second connection structure 2322 may be configured to have elasticity. The first connection structure 2321 and the second connection structure 2322 may include structures 2332 such as a plurality of slits or openings. The structures 2332 may be defined by wires 2331 disposed in the first connection structure 2321 and the second connection structure 2322. It has been described that the first connection structure 2321 and the second connection structure 2322 are formed by wires, but it is not limited thereto, and openings or slits may be formed in a plate, such as a lattice pattern formed in pattern portions of a flexible plate 310.

According to the above-described embodiment, an electronic device may increase rigidity of the display by further including a portion of supporting plates or a rigid plate for reinforcing a foldable portion of a display.

The display may prevent or reduce damage to the supporting plate while increasing the rigidity of the display by including separated portions, such as the rigid plate.

According to the above-described embodiment, an electronic device may comprise a wide hinge structure and a narrow hinge structure. This combination of hinge structures may allow for the provision of a conveniently foldable device.

The technical problems to be achieved in the present document are not limited to those described above, and other technical problems not mentioned herein will be clearly understood by those having ordinary knowledge in the art to which the present document belongs, from the following description.

According to the above-described embodiment, a multi foldable electronic device (e.g., the electronic device 100 of FIG. 1A) may include a housing (e.g., the housing 101 of FIG. 1A). The housing may include a first housing part (e.g., the first housing part 110 of FIG. 1A), a second housing part (e.g., the second housing part 120 of FIG. 1A), and a third housing part (e.g., the third housing part 130 of FIG. 1A), a first hinge structure (e.g., the first hinge structure 150 of FIG. 1A) that rotatably connects the first housing part and the second housing part, and a second hinge structure (e.g., the second hinge structure 160 of FIG. 1A) that rotatably connects the second housing part and the third housing part. The multi foldable electronic device may include a flexible display (e.g., the display 140 of FIG. 1A) defining a front surface of the housing. The flexible display may include a display panel (e.g., the display panel 301 of FIG. 3), a flexible plate (e.g., the flexible plate 310 of FIG. 3) supporting the display panel, and a set of supporting plates (e.g., the set of supporting plates 320 of FIG. 3) supporting the flexible plate. The flexible plate may include a foldable portion (e.g., the second foldable portion 145 of FIG. 1A) including a first portion (e.g., the first pattern portion 711 of FIG. 7A) having first openings, a second portion (e.g., the second pattern portion 712 of FIG. 7A) having second openings, and a third portion (e.g., the first portion 713 of FIG. 7A) disposed between the first portion and the second portion, a first unfoldable portion (e.g., the second unfoldable portion 142 of FIG. 1A), and a second unfoldable portion (e.g., the third unfoldable portion 144 of FIG. 1A). The first portion, the second portion, and the third portion may be disposed on the first hinge structure, which is wider than a width of the second hinge structure. The set of the supporting plates may include a first supporting portion (e.g., the third rigid plate 723 of FIG. 7A) in contact with the third portion of the flexible plate, a second supporting portion (e.g., the first rigid plate 721 of FIG. 7A) spaced apart from the first supporting portion and in contact with a portion of the first unfoldable portion of the flexible plate, and a third supporting portion (e.g., the second rigid plate 722 of FIG. 7A) spaced apart from the second supporting portion and in contact with a portion of the second unfoldable portion of the flexible plate.

According to an embodiment, the first supporting portion, the second supporting portion, and the third supporting portion may overlap the first hinge structure when viewed from above in an unfolded state of the multi foldable electronic device.

According to an embodiment, the first supporting portion, the second supporting portion, and the third supporting portion may support the foldable portion of the flexible plate in an unfolded state of the multi foldable electronic device.

According to an embodiment, in the unfolded state of the multi foldable electronic device, the second supporting portion may be disposed under the first portion and the first unfoldable portion. In the unfolded state of the multi foldable electronic device, the third supporting portion may be disposed under the second portion and the second unfoldable portion.

According to an embodiment, the first supporting portion may be attached to the third portion of the flexible plate. The second supporting portion may be attached to the first unfoldable portion of the flexible plate. The third supporting portion may be attached to the second unfoldable portion of the flexible plate.

According to an embodiment, the first hinge structure may include rotators rotating along each of folding axes of the first hinge structure. The second hinge structure may include rotators rotating along each of folding axes of the second hinge structure and hinge plates supported by each of the rotators of the second hinge structure.

According to an embodiment, the multi foldable electronic device may include a magnet disposed between a first rotator and a second rotator sharing one folding axis among the rotators of the first hinge structure. The magnet may be configured to maintain a folded state of the multi foldable electronic device in the folded state of the multi foldable electronic device.

According to an embodiment, a first distance between the folding axes of the first hinge structure may be greater than a second distance between the folding axes of the second hinge structure.

According to an embodiment, a width of the first supporting portion may be smaller than the first distance between the folding axes of the first hinge structure.

According to an embodiment, the first portion of the set of the supporting plates may be attached to the first hinge structure. The second portion of the set of the supporting plates may be attached to the first hinge structure and the first housing part connected to the first hinge structure. The third portion of the set of the supporting plates may be attached to the first hinge structure and the second housing part connected to the first hinge structure.

According to an embodiment, in the folded state of the multi foldable electronic device, a distance between the first portion of the set of the supporting plates and a bottom surface of the first hinge structure may be shorter than a distance between the second portion of the set of the supporting plates and the bottom surface of the first hinge structure or a distance between the third portion of the set of the supporting plates and the bottom surface of the first hinge structure.

According to an embodiment, the first portion of the set of the supporting plates may include a protruding portion extending in a direction parallel to the folding axes of the first hinge structure.

According to an embodiment, the multi foldable electronic device may further include a protection structure partially surrounding a periphery of the display. The protection structure may include a stopper portion in contact with the protruding portion to limit a movement of the display in a direction facing a front surface of the electronic device in the unfolded state of the multi foldable electronic device.

According to an embodiment, the protection structure may include a protruding portion disposed on an end portion of the first hinge structure and protruding toward the periphery of the display.

According to an embodiment, the set of the supporting plates may include a first connection portion disposed between the first rigid plate and the second rigid plate and including patterns to have elasticity, and a second connection portion disposed between the second rigid plate and the third rigid plate and including patterns to have elasticity.

According to an embodiment, a multi foldable electronic device (e.g., the electronic device 100 of FIG. 1A) may include a housing (e.g., the housing 101 of FIG. 1A) including a first housing part (e.g., the first housing part 110 of FIG. 1A), a second housing part (e.g., the second housing part 120 of FIG. 1A), and a third housing part (e.g., the third housing part 130 of FIG. 1A), and a first hinge structure (e.g., the first hinge structure 150 of FIG. 1A) that rotatably connects the first housing part and the second housing part, and a second hinge structure (e.g., the second hinge structure 160 of FIG. 1A) that rotatably connects the second housing part and the third housing part, and a flexible display (e.g., the display 140 of FIG. 1A) that defines a front surface of the housing. The flexible display may include a display panel (e.g., the display panel 301 of FIG. 3), a flexible plate (e.g., the flexible plate 310 of FIG. 3) supporting the display panel, and a set of supporting plates (e.g., the set of the supporting plates 320 of FIG. 3) supporting the flexible plate. The flexible plate may include a first pattern portion (e.g., the first pattern portion 711 of FIG. 7A), a second pattern portion (e.g., the second pattern portion 712 of FIG. 7A), spaced apart from a side of the first pattern portion and including the openings, a first supporting portion (e.g., the first portion 713 of FIG. 7A) disposed between the first pattern portion and the second pattern portion, a second supporting portion (e.g., the second portion 914 of FIG. 9) connected to another side of the first pattern portion, and a third supporting portion (e.g., the second supporting portion 914 of FIG. 9) connected to a side of the second pattern portion. The set of the supporting plates may include a first rigid plate (e.g., the third rigid plate 723 of FIG. 7A) disposed on the first supporting portion of the flexible plate.

According to an embodiment, the set of the supporting plates may include a second rigid plate (e.g., the first rigid plate 721 of FIG. 7A) disposed in the second supporting portion of the flexible plate and a third rigid plate (e.g., the second rigid plate 722 of FIG. 7A) disposed in the third supporting portion of the flexible plate.

According to an embodiment, the second rigid plate may be attached to the second supporting portion, and the third rigid plate may be attached to the third supporting portion.

According to an embodiment, the first rigid plate may overlap the first hinge structure when viewed from above.

According to an embodiment, the first rigid plate may be attached to the first supporting portion of the flexible plate.

The effects that can be obtained from the present disclosure are not limited to those described above, and any other effects not mentioned herein will be clearly understood by those having ordinary knowledge in the art to which the present disclosure belongs.

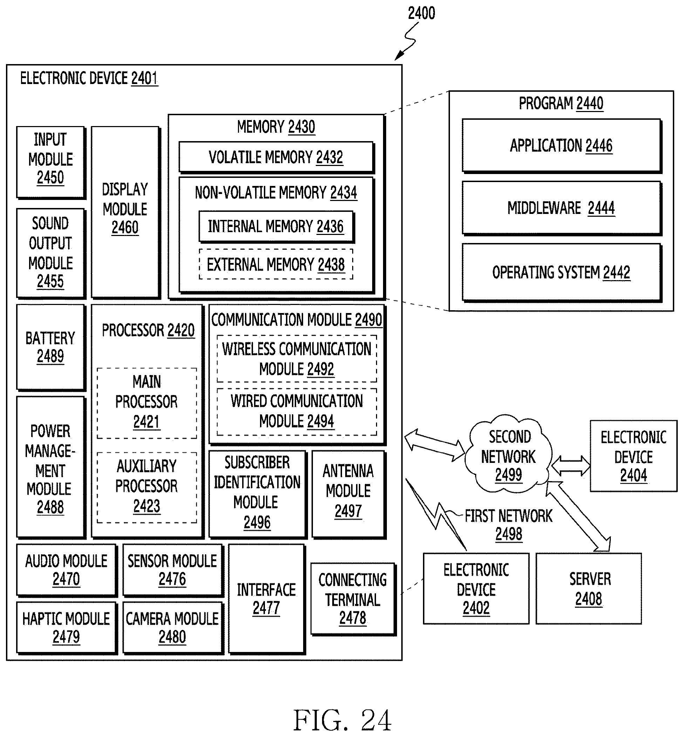

FIG. 24 is a block diagram illustrating an electronic device 2401 in a network environment 2400 according to various embodiments.

Referring to FIG. 24, the electronic device 2401 in the network environment 2400 may communicate with an electronic device 2402 via a first network 2498 (e.g., a short-range wireless communication network), or at least one of an electronic device 2404 or a server 2408 via a second network 2499 (e.g., a long-range wireless communication network). According to an embodiment, the electronic device 2401 may communicate with the electronic device 2404 via the server 2408. According to an embodiment, the electronic device 2401 may include a processor 2420, memory 2430, an input module 2450, a sound output module 2455, a display module 2460, an audio module 2470, a sensor module 2476, an interface 2477, a connecting terminal 2478, a haptic module 2479, a camera module 2480, a power management module 2488, a battery 2489, a communication module 2490, a subscriber identification module(SIM) 2496, or an antenna module 2497. In some embodiments, at least one of the components (e.g., the connecting terminal 2478) may be omitted from the electronic device 2401, or one or more other components may be added in the electronic device 2401. In some embodiments, some of the components (e.g., the sensor module 2476, the camera module 2480, or the antenna module 2497) may be implemented as a single component (e.g., the display module 2460).

The processor 2420 may execute, for example, software (e.g., a program 2440) to control at least one other component (e.g., a hardware or software component) of the electronic device 2401 coupled with the processor 2420, and may perform various data processing or computation. According to an embodiment, as at least part of the data processing or computation, the processor 2420 may store a command or data received from another component (e.g., the sensor module 2476 or the communication module 2490) in volatile memory 2432, process the command or the data stored in the volatile memory 2432, and store resulting data in non-volatile memory 2434. According to an embodiment, the processor 2420 may include a main processor 2421 (e.g., a central processing unit (CPU) or an application processor (AP)), or an auxiliary processor 2423 (e.g., a graphics processing unit (GPU), a neural processing unit (NPU), an image signal processor (ISP), a sensor hub processor, or a communication processor (CP)) that is operable independently from, or in conjunction with, the main processor 2421. For example, when the electronic device 2401 includes the main processor 2421 and the auxiliary processor 2423, the auxiliary processor 2423 may be adapted to consume less power than the main processor 2421, or to be specific to a specified function. The auxiliary processor 2423 may be implemented as separate from, or as part of the main processor 2421.

The auxiliary processor 2423 may control at least some of functions or states related to at least one component (e.g., the display module 2460, the sensor module 2476, or the communication module 2490) among the components of the electronic device 2401, instead of the main processor 2421 while the main processor 2421 is in an inactive (e.g., sleep) state, or together with the main processor 2421 while the main processor 2421 is in an active state (e.g., executing an application). According to an embodiment, the auxiliary processor 2423 (e.g., an image signal processor or a communication processor) may be implemented as part of another component (e.g., the camera module 2480 or the communication module 2490) functionally related to the auxiliary processor 2423. According to an embodiment, the auxiliary processor 2423 (e.g., the neural processing unit) may include a hardware structure specified for artificial intelligence model processing. An artificial intelligence model may be generated by machine learning. Such learning may be performed, e.g., by the electronic device 2401 where the artificial intelligence is performed or via a separate server (e.g., the server 2408). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 2430 may store various data used by at least one component (e.g., the processor 2420 or the sensor module 2476) of the electronic device 2401. The various data may include, for example, software (e.g., the program 2440) and input data or output data for a command related thereto. The memory 2430 may include the volatile memory 2432 or the non-volatile memory 2434.

The program 2440 may be stored in the memory 2430 as software, and may include, for example, an operating system (OS) 2442, middleware 2444, or an application 2446.

The input module 2450 may receive a command or data to be used by another component (e.g., the processor 2420) of the electronic device 2401, from the outside (e.g., a user) of the electronic device 2401. The input module 2450 may include, for example, a microphone, a mouse, a keyboard, a key (e.g., a button), or a digital pen (e.g., a stylus pen).

The sound output module 2455 may output sound signals to the outside of the electronic device 2401. The sound output module 2455 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 2460 may visually provide information to the outside (e.g., a user) of the electronic device 2401. The display module 2460 may include, for example, a display, a hologram device, or a projector and control circuitry to control a corresponding one of the display, hologram device, and projector. According to an embodiment, the display module 2460 may include a touch sensor adapted to detect a touch, or a pressure sensor adapted to measure the intensity of force incurred by the touch.

The audio module 2470 may convert a sound into an electrical signal and vice versa. According to an embodiment, the audio module 2470 may obtain the sound via the input module 2450, or output the sound via the sound output module 2455 or a headphone of an external electronic device (e.g., an electronic device 2402) directly (e.g., wiredly) or wirelessly coupled with the electronic device 2401.

The sensor module 2476 may detect an operational state (e.g., power or temperature) of the electronic device 2401 or an environmental state (e.g., a state of a user) external to the electronic device 2401, and then generate an electrical signal or data value corresponding to the detected state. According to an embodiment, the sensor module 2476 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 2477 may support one or more specified protocols to be used for the electronic device 2401 to be coupled with the external electronic device (e.g., the electronic device 2402) directly (e.g., wiredly) or wirelessly. According to an embodiment, the interface 2477 may include, for example, a high definition multimedia interface (HDMI), a universal serial bus (USB) interface, a secure digital (SD) card interface, or an audio interface.

A connecting terminal 2478 may include a connector via which the electronic device 2401 may be physically connected with the external electronic device (e.g., the electronic device 2402). According to an embodiment, the connecting terminal 2478 may include, for example, an HDMI connector, a USB connector, a SD card connector, or an audio connector (e.g., a headphone connector).

The haptic module 2479 may convert an electrical signal into a mechanical stimulus (e.g., a vibration or a movement) or electrical stimulus which may be recognized by a user via his tactile sensation or kinesthetic sensation. According to an embodiment, the haptic module 2479 may include, for example, a motor, a piezoelectric element, or an electric stimulator.

The camera module 2480 may capture a still image or moving images. According to an embodiment, the camera module 2480 may include one or more lenses, image sensors, image signal processors, or flashes.

The power management module 2488 may manage power supplied to the electronic device 2401. According to an embodiment, the power management module 2488 may be implemented as at least part of, for example, a power management integrated circuit (PMIC).

The battery 2489 may supply power to at least one component of the electronic device 2401. According to an embodiment, the battery 2489 may include, for example, a primary cell which is not rechargeable, a secondary cell which is rechargeable, or a fuel cell.

The communication module 2490 may support establishing a direct (e.g., wired) communication channel or a wireless communication channel between the electronic device 2401 and the external electronic device (e.g., the electronic device 2402, the electronic device 2404, or the server 2408) and performing communication via the established communication channel. The communication module 2490 may include one or more communication processors that are operable independently from the processor 2420 (e.g., the application processor (AP)) and supports a direct (e.g., wired) communication or a wireless communication. According to an embodiment, the communication module 2490 may include a wireless communication module 2492 (e.g., a cellular communication module, a short-range wireless communication module, or a global navigation satellite system (GNSS) communication module) or a wired communication module 2494 (e.g., a local area network (LAN) communication module or a power line communication (PLC) module). A corresponding one of these communication modules may communicate with the external electronic device via the first network 2498 (e.g., a short-range communication network, such as Bluetooth^{™}, wireless-fidelity (Wi-Fi) direct, or infrared data association (IrDA)) or the second network 2499 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 2492 may identify and authenticate the electronic device 2401 in a communication network, such as the first network 2498 or the second network 2499, using subscriber information (e.g., international mobile subscriber identity (IMSI)) stored in the subscriber identification module 2496.

The wireless communication module 2492 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 2492 may support a high-frequency band (e.g., the mmWave band) to achieve, e.g., a high data transmission rate. The wireless communication module 2492 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 2492 may support various requirements specified in the electronic device 2401, an external electronic device (e.g., the electronic device 2404), or a network system (e.g., the second network 2499). According to an embodiment, the wireless communication module 2492 may support a peak data rate (e.g., 20Gbps or more) for implementing eMBB, loss coverage (e.g., 2464dB or less) for implementing mMTC, or U-plane latency (e.g., 0.5ms or less for each of downlink (DL) and uplink (UL), or a round trip of 24ms or less) for implementing URLLC.

The antenna module 2497 may transmit or receive a signal or power to or from the outside (e.g., the external electronic device) of the electronic device 2401. According to an embodiment, the antenna module 2497 may include an antenna including a radiating element composed of a conductive material or a conductive pattern formed in or on a substrate (e.g., a printed circuit board (PCB)). According to an embodiment, the antenna module 2497 may include a plurality of antennas (e.g., array antennas). In such a case, at least one antenna appropriate for a communication scheme used in the communication network, such as the first network 2498 or the second network 2499, may be selected, for example, by the communication module 2490 (e.g., the wireless communication module 2492) from the plurality of antennas. The signal or the power may then be transmitted or received between the communication module 2490 and the external electronic device via the selected at least one antenna. According to an embodiment, another component (e.g., a radio frequency integrated circuit (RFIC)) other than the radiating element may be additionally formed as part of the antenna module 2497.

According to various embodiments, the antenna module 2497 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 2401 and the external electronic device 2404 via the server 2408 coupled with the second network 2499. Each of the electronic devices 2402 or 2404 may be a device of a same type as, or a different type, from the electronic device 2401. According to an embodiment, all or some of operations to be executed at the electronic device 2401 may be executed at one or more of the external electronic devices 2402, 2404, or 2408. For example, if the electronic device 2401 should perform a function or a service automatically, or in response to a request from a user or another device, the electronic device 2401, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 2401. The electronic device 2401 may provide the outcome, with or without further processing of the outcome, as at least part of a reply to the request. To that end, a cloud computing, distributed computing, mobile edge computing (MEC), or client-server computing technology may be used, for example. The electronic device 2401 may provide ultra low-latency services using, e.g., distributed computing or mobile edge computing. In another embodiment, the external electronic device 2404 may include an internet-of-things (IoT) device. The server 2408 may be an intelligent server using machine learning and/or a neural network. According to an embodiment, the external electronic device 2404 or the server 2408 may be included in the second network 2499. The electronic device 2401 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 2440) including one or more instructions that are stored in a storage medium (e.g., internal memory 2436 or external memory 2438) that is readable by a machine (e.g., the electronic device 2401). For example, a processor (e.g., the processor 2420) of the machine (e.g., the electronic device 2401) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. A muti foldable electronic device comprising:
a housing comprising a first housing part, a second housing part, and a third housing part;
a first hinge structure rotatably connecting the first housing part and the second housing part;
a second hinge structure rotatably connecting the second housing part and the third housing part and wider than the first hinge structure; and
a flexible display disposed on the first housing part, the second housing part, and the third housing part and including a first folding area foldable by rotation of the first hinge structure and a second folding area foldable by rotation of the second hinge structure;
wherein the flexible display comprises:
a display panel;
a flexible plate configured to support the display panel and disposed on a back surface of the display panel; and
a set of supporting plates configured to support at least a part of the flexible plate,
wherein the set of supporting plates comprises:
a first rigid plate corresponding to a partial area of a left side of the second folding area;
a second rigid plate corresponding to a partial area of a right side of the second folding area; and
a third rigid plate corresponding to a center area of the second folding area.

2. The multi foldable electronic device of claim 1, wherein the first rigid plate, the second rigid plate, and the third rigid plate, when viewed from above in an unfolded state of the multi foldable electronic device, overlap the second hinge structure.

3. The multi foldable electronic device of claim 1 or 2, wherein the first rigid plate, the second rigid plate, and the third rigid plate are configured to support a portion of the flexible plate corresponding to the first folding area, in the unfolded state of the multi foldable electronic device.

4. The multi foldable electronic device of claim 3, wherein the first rigid plate is disposed under a portion of the flexible plate corresponding to the second folding area and a portion corresponding to the partial area of the left side of the first folding area, in the unfolded state of the multi foldable electronic device, and
wherein the second rigid plate is disposed under the portion of the flexible plate and a portion corresponding to the partial area of the right side of the second folding portion, in the unfolded state of the multi foldable electronic device.

5. The multi foldable electronic device of claim 4, wherein the third rigid plate is attached to the portion of the flexible display corresponding to the second folding area,
wherein the first rigid plate is attached to the portion of the flexible plate corresponding to the partial area of the right side of the second folding area, and
wherein the second rigid plate is attached to the portion of the flexible plate corresponding to the partial area of the left side of the second folding area.

6. The multi foldable electronic device of any one of claims 1 to 5, wherein the first hinge structure comprises rotators configured to rotate along each of folding axes of the first hinge structure, and
wherein the second hinge structure comprises rotators configured to rotate along each of folding axes of the second hinge structure, and hinge plates supported by each of the rotators of the second hinge structure.

7. The multi foldable electronic device of claim 6, further comprising a magnet disposed between a first rotator and a second rotator of the rotators of the first hinge structure sharing one folding axis, and
wherein the magnet is configured to maintain a folded state of the multi foldable electronic device, in the folded state of the multi foldable electronic device.

8. The multi foldable electronic device of claim 6 or 7, wherein a first distance between the folding axes of the first hinge structure is smaller than a second distance between the folding axes of the second hinge structure.

9. The multi foldable electronic device of any one of claims 6 to 8, wherein a width of the third rigid plate is smaller than the second distance between the folding axes of the second hinge structure.

10. The multi foldable electronic device of any one of claims 1 to 9, wherein the first rigid plate is attached to the second hinge structure and the second housing part,
wherein the second rigid plate is attached to the second hinge structure and the third housing part, and
wherein the third rigid plate is attached to the second hinge structure.

11. The multi foldable electronic device of any one of claims 1 to 10, wherein a distance between the third rigid plate and a bottom surface of the second hinge structure is shorter than a distance between the first rigid plate and the bottom surface of the second hinge structure or a distance between the second rigid plate and the bottom surface of the second hinge structure, in the folded state of the multi foldable electronic device.

12. The multi foldable electronic device of any one of claims 1 to 11, wherein the third rigid plate includes a protruding portion extending in a direction parallel to the folding axes of the second hinge structure.

13. The multi foldable electronic device of claim 12, further comprising a protection structure at least partially surrounding a periphery of the display,
wherein the protection structure comprises a stopper portion in contact with the protruding portion configured to limit a movement of the display in a direction facing a front surface of the electronic device.

14. The multi foldable electronic device of claim 13, wherein the protection structure comprises a protruding portion disposed on an end portion of the second hinge structure and protruding towards a periphery of the display.

15. The multi foldable electronic device of any one of claims 1 to 14, wherein the set of the supporting plates further comprises:
a first connection portion disposed between the first rigid plate and the third rigid plate and configured to be elastically moveable, and
a second connection portion disposed between the second rigid plate and the third rigid plate and configured to be elastically moveable.
